# EUROPEAN PATENT APPLICATION

(11) **EP 3 922 939 A1**
(43) Date of publication of application: **15.12.2021**
(21) Application number: 21175022.9
(22) Date of filing: 20.05.2021
(51) Int. Cl.: F28D 20/00

(54) **A METHOD FOR STORING THERMAL ENERGY, A THERMAL STORAGE SYSTEM AND A USE OF SUCH A THERMAL STORAGE SYSTEM**

(30) Priority: 11.06.2020 SE 2050695
(71) Applicant: Vattenfall AB, 169 92 Stockholm (SE)
(72) Inventor: NORDLANDER, Mikael, 802 75 Gävle (SE); ERIKSSON, Jan, 819 62 Karlholmsbruk (SE); HEMSTRÖM, Bengt, 814 70 Älvkarleby (SE); ERIKSSON, Magnus, 802 57 Gävle (SE)
(74) Representative: Zacco Sweden AB

(57) **Abstract**

The invention relates to a thermal storage system (10) for industrial processes. The thermal storage system (10) comprising: a storage container (20) extending longitudinally between a first end (21) and a second end (22), wherein the first end (21) comprises at least one first fluid opening (23) and the second end (22) comprises at least one second fluid opening (24); a bed (35) of heat storage elements (30) arranged inside the storage container (20); and a heat transfer fluid (40), wherein the heat transfer fluid (40) is configured to transfer heat to the heat storage elements (30) in a charging mode and from the heat storage elements (30) in a discharging mode. The heat storage elements (30) comprise iron ore pellets. The invention also relates to a method and a use of the thermal storage system (10).

## Description

### TECHNICAL FIELD

The present invention relates to a thermal storage system for industrial processes. The invention also relates to method for storing thermal energy by using such a thermal storage system. The invention further relates to a use of such a thermal storage system.

### BACKGROUND

Industrial processes that require high temperatures and are reliant on electricity are many times dependent on an uninterruptable power supply. Lack of electric power supply results in lower production and higher costs. One way to manage irregular supply of energy is to use an energy storage as an uninterruptable power supply (UPS) in conjunction with the industry process. Generally, an UPS may be in the form of an electrical apparatus that provides emergency power to a load when the input power source or mains power fails, by supplying energy stored in batteries, super capacitors, or flywheels. Another way to store and manage energy is by using thermal energy storage. Thermal energy storage (TES) is a technology that stocks thermal energy by heating or cooling a storage medium so that the stored energy can be used at a later time for heating and cooling applications and power generation. With the emerging transformation of many heavy industry processes towards increased levels of electrification, the need for efficient storage of electricity and thermal energy continuously increases.

Another important objective when it comes to energy-intensive industrial processes is to reduce the consumption and dependence on fossil fuels. Energy systems powered by fossil fuel causes emissions that may contribute to climate change, which is one of the biggest challenges of our time. Thus, in order to enable fossil free living going forward, transition has to be made. However, renewable energy is not always available when needed and, just as often, when energy is available the quantities produced may amount to more than is required. Consequently, there is need for enabling storage of energy when the availability is high until periods of unavailability or increased demands of energy. Thus, it is of utter importance to be able to offer effective energy storing solutions, which are also energy- and cost-efficient, in order to achieve more sustainable industrial processes.

One known solution for a thermal storage system is disclosed in document WO 2014102418 A1. The document describes a solution for storage and recovery of thermal energy using at a phase change material as medium and a sensible heat solid material for storing/recovering the heat obtained from an external source.

### SUMMARY OF THE INVENTION

An object of the present invention is to achieve a thermal storage system for industrial processes. Another object of the invention is to ensure cost- and energy efficient supply of thermal energy. A further object of the invention is to reduce the consumption and dependence on fossil fuels in industrial processes.

Further objects of the invention is to achieve a new and advantageous method and use of such a thermal storage system.

The herein mentioned objects are achieved by:
- a thermal storage system for industrial processes,
- a method for storing thermal energy by using a thermal storage system,
- a use of a thermal storage system as disclosed herein for storage and supply of heat for calcining processes and/or steam cycle processes and/or paper/pulp processes and/or district heating networks,
according to the independent claims.

Hence, according to an aspect of the present disclosure, a thermal storage system for industrial processes is provided. The thermal storage system is configured for cycling between a charging mode, a storing mode and a discharging mode. The thermal storage system comprising: a storage container extending longitudinally between a first end and a second end along an axis, wherein the first end comprises at least one first fluid opening and the second end comprises at least one second fluid opening, wherein inner walls extend between the first end and the second end of the storage container; a bed of heat storage elements arranged inside the storage container, the heat storage elements are in a solid state in the charging mode, the storing mode and the discharging mode; and a heat transfer fluid. The heat transfer fluid is allowed to enter the storage container at one of the first and second ends through the at least one first fluid opening or the at least one second fluid opening and flow through the bed of heat storage elements to the opposite end of the storage container. The heat transfer fluid is configured to transfer heat to the heat storage elements in the charging mode and from the heat storage elements in the discharging mode. The heat transfer fluid is in a gaseous state in the charging mode, the storing mode and the discharging mode. The heat transfer fluid is configured to enter the storage container at a temperature of at least 500°C in the charging mode. The heat storage elements comprise iron ore pellets.

According to another aspect of the present disclosure, a method for storing thermal energy by using a thermal storage system is provided. The thermal storage system is configured for cycling between a charging mode, a storing mode and a discharging mode. The thermal storage system comprising: a storage container extending longitudinally between a first end and a second end along an axis, wherein the first end comprises at least one first fluid opening and the second end comprises at least one second fluid opening, wherein inner walls extend between the first end and the second end of the storage container; a bed of heat storage elements arranged inside the storage container, the heat storage elements are in a solid state in the charging mode, the storing mode and the discharging mode, the heat storage elements comprises iron ore pellets; and heat transfer fluid, wherein the heat transfer fluid is allowed to enter the thermal storage system at one of the first and second ends through the at least one first fluid opening or the at least one second fluid opening and flow through the bed of heat storage elements to the opposite end of the storage container, the heat transfer fluid is in a gaseous state in the charging mode, the storing mode and the discharging mode. The method comprises the steps of: charging the thermal storage system by allowing the heat transfer fluid to flow through the bed of the heat storage elements, wherein the heat transfer fluid is at a temperature of at least 500°C when entering the storage container, whereby heat from the heat transfer fluid is transferred to the heat storage elements; storing heat in the thermal storage system by means of disabling the flow of the heat transfer fluid; and discharging heat from the thermal storage system by allowing the heat transfer fluid to flow through the bed of the heat storage elements, whereby heat from the heat storage elements is transferred to the heat transfer fluid.

According to another aspect of the present disclosure, a use of a thermal storage system as disclosed herein for storage and supply of heat for calcining processes and/or steam cycle processes and/or paper/pulp processes and/or district heating networks is provided.

Today, there are some various types of thermal storages available. Examples of thermal storages solutions for high temperature applications commonly used are molten salt storages and hot rock storages, which may be capable of reaching a maximum output temperature of around 600°C. However, industrial processes such as calcining processes temperatures demands output temperatures above 900°C. Thus, for such applications, most currently available thermal storage solution are not an option. Molten-salt solutions also have negative aspects such as being difficult to handle and pose environmental risks.

By having a thermal storage system according to the present disclosure in an industrial process, a significantly higher output temperature may be obtained, compared to thermal heat storages comprising e.g. molten salt or hot rocks. By using iron ore pellets as heat storage elements and a gaseous heat transfer fluid in the present disclosure, output temperatures about 1200°C may be achieved. The use of iron ore pellets is also favourable since iron ore pellets have high availability and a relatively low price. In addition, iron ore pellets have relatively low impact on the environment and thermophysical properties improving the energy efficiency while increasing the output temperature at discharge. These are essential differences compared to other thermal heat storage solutions. Thus, the present disclosure enables new and advantageous, energy- and cost-efficient applications where the use of thermal storage systems have not been an option before, such as industrial processes requiring high temperature output. Consequently, the environmental footprint relating to such industrial process may be significantly reduced.

One of the technical benefits of the thermal storage system as disclosed herein is that is it scalable, up to a bed size of heat storage elements of several hundred thousand m³, which may correspond to stored energy ranging from a few kWh to 100 GWh and a power output ranging from kW to hundreds of MW.

By means of the present disclosure, an increased flexibility in electricity consumption is achieved by allowing industrial processes to be less reliant on the grid. Thus, any negative impacts, which may arise due to sudden power outage or disturbances in the transmission grid, is decreased. In addition, companies that buy electricity to produce heat for their industrial processes can create flexibility in the procurement of electricity. This enables them to buy their electricity at the most convenient and cheap moment, while using the thermal energy later on in their industrial process. Consequently, the present disclosure may eliminate, or at least decrease, the need for electric back-up storage and serve as a UPS for thermal energy and/or electric power supply.

For industrial processes powered by electricity from local renewable power sources, the thermal storage system according to the present disclosure offers an option to be 'grid independent'. In this case, the industrial process can use the mains power supply as a back-up rather than primary power source and benefit from feed-in-tariffs from exporting excess power to the grid. Thus, the industrial process may be essentially self-sufficient of energy.

By the use of the present disclosure, the dependency on the grid and on fossil fuels may be reduced in several ways. Firstly, by enabling storing of intermittently produced renewable energy, and secondly, by enabling that all the subsequent process steps when the stored energy is consumed are fossil free. Thus, the cost- and energy efficient over the whole energy chain, from generation to consumption may be improved, hence improving the sustainability of the industrial process.

One specific application where the disclosure of a thermal storage system as described herein is suitable is for storage and supply of heat for calcining processes. Examples of industries wherein calcining processes are used is for example within lime and cement production. The process of calcining requires extremely high temperatures. Thus, the calcining industry is energy demanding and depends on high output temperatures. In addition, calcining industries may be located geographically close to e.g. a limestone quarry. Such excavation may not always be located where there is reliable and high power availability. Thus, the present disclosure enables high temperature output suitable for calcining processes while ensuring sustainable, cost- and energy efficient energy supply. Similar benefits as mentioned above for the calcining process may also be highly relevant for paper and pulp processes.

Another specific application where the disclosure of a thermal storage system as described herein is valuable is for storage and supply of heat for steam cycle processes. A steam cycle process may for example be implemented in a power-to-power process, where excess electricity from solar or wind farms is used for heating of a thermal storage. The stored heat may then be converted back into electricity when it is needed by means of a steam cycle process, by e.g. creating steam that drives a turbine generator. Energy can thus be stored e.g. overnight during off-peak rates and used during peak time rate periods to reduce overall costs. Generators can also be used with thermal storage systems to provide another source of standby power as backup to renewable power sources and/or the grid. A thermal storage system as disclosed herein may also be applicable for generation of process steam.

Another specific application where the disclosure of a thermal storage system as described herein is beneficial is for storage and supply of heat for district heating networks. Without being able to store energy, the power grid operators need a real-time match between electricity supply and consumption for a stable transmission and distribution. Heat load variations in district heating systems lead to increased costs for heat generation and, in most cases, increased greenhouse gas emissions associated with the use of fossil fuels that may be used to meet the increased energy demand at peaks. Thus, by applying thermal energy storage in district heating systems, any mismatch between generation and demand of energy may be smoothen out. Thus, the cost- and energy efficient supply of thermal energy may be achieved while reducing the consumption and dependence on fossil fuels.

The thermal storage system as disclosed herein is suitable for various industrial processes. However, the thermal storage system may be applicable for storage and supply of energy to other "consumers of heat energy", which may refers to any element or process capable of receiving heat energy. According to an example, the thermal storage system may be used for heating of a building complex or other similar applications. The consumer of heat energy may convert the stored heat into mechanical energy, for example in the case of a gas turbine.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For better understanding of the present invention and further objects and advantages of it, the detailed description set out below should be read together with the accompanying drawings, in which the same reference notations denote similar items in the various drawings, and in which:
- Figure 1: schematically illustrates an overview of a thermal storage system for an industrial process according to an example;
- Figures 2a-2c: schematically illustrate a thermal storage system according to some examples;
- Figure 3: schematically illustrates a thermal storage system according to an example;
- Figure 4: schematically illustrates a thermal storage system according to an example;
- Figure 5: schematically illustrate details of a thermal storage system according to an example;
- Figures 6a-6c: schematically illustrate details of a thermal storage system according to some examples;
- Figures 7a-7d: schematically illustrate details of a thermal storage system according to some examples;
- Figures 8a-8b: schematically illustrate a thermal storage system according to some examples; and
- Figure 9: schematically illustrates a block diagram of a method for storing thermal energy according to an example.

### DETAILED DESCRIPTION

To ensure cost- and energy efficient supply of thermal energy while reducing the dependency on the grid and fossil fuel; a thermal storage system, a method and a use according to the present disclosure have been developed.

The thermal storage system will be described in further detail below. It is understood that all the various examples of the thermal storage system also applies for the method and the use as disclosed herein

Hence, according to an aspect of the present disclosure, a thermal storage system for industrial processes is provided. The thermal storage system is configured for cycling between a charging mode, a storing mode and a discharging mode. The thermal storage system comprising: a storage container extending longitudinally between a first end and a second end along an axis, wherein the first end comprises at least one first fluid opening and the second end comprises at least one second fluid opening, wherein inner walls extend between the first end and the second end of the storage container; a bed of heat storage elements arranged inside the storage container, the heat storage elements are in a solid state in the charging mode, the storing mode and the discharging mode; and a heat transfer fluid, wherein the heat transfer fluid is allowed to enter the storage container at one of the first and second ends through the at least one first fluid opening or the at least one second fluid opening and flow through the bed of heat storage elements to the opposite end of the storage container, wherein the heat transfer fluid is configured to transfer heat to the heat storage elements in the charging mode and from the heat storage elements in the discharging mode, wherein the heat transfer fluid is in a gaseous state in the charging mode, the storing mode and the discharging mode. The heat transfer fluid is configured to enter the storage container at a temperature of at least 500°C in the charging mode. The heat storage elements comprise iron ore pellets.

The present disclosure may relate to industrial processes in power demanding industrial plants. According to examples, the industrial processes may comprise calcining processes, paper and pulp processes and/or steam cycle processes, and/or district heating networks. According to an example, the industrial process may relate to metal manufacturing and/or the mining industry.

By cycling the thermal storage system between a charging mode, a storing mode and a discharging mode, thermal energy may repeatedly be loaded, stored and supplied to an industrial process. The cycling may be thus be recurrent. The heat storage system may cycle between the different modes in any suitable order and degree. For example, the thermal storage system may be loaded in the charging mode when there is energy available for heating, and heat may be discharged when there is a demand for heat by the industrial process. In between these occasions, the heat may be stored in the thermal storage system. However, if there is instant demand for discharge, there may be no significant storing time between the charging and discharging. The thermal storage system may not be completely charged and/or discharged for altering between the different modes. According to an example, the thermal storage system may be charged to a degree corresponding to the current accessibility of energy for heating. Thus, if there is a limited amount of energy available, the thermal storage may only be charged to a degree, e.g. 20%, and thereafter shifted into the storing mode, if there is no demand for thermal energy from the industrial process. Later on, if more energy is accessible for heating, the thermal storage system may shift to the charging mode again and continue to charge to a degree, e.g. up to 40%. The discharge of heat from the heat storage system may be supplied to the energy consumer in a corresponding way, i.e. the discharge may go on as long as there is a demand and enough stored heat available.

However, if the demand ceases, the discharge of energy may be ended. Thus, the alteration between the different modes thermal storage system may occur in any order, depending on the current demand from the industrial process for discharge of energy in a discharging mode and the availability of the energy for heating in the charging mode. Thus, the thermal storage system may be configured for frequent and repeated cycling between a charging mode, a storing mode and a discharging mode. This means that thermal storage system is configured to handle extensive temperature strain and wear due to the recurring heating and cooling within the thermal storage system.

The storage container extends longitudinally between a first end and a second end along an axis. The storage container may be configured to be arranged with the axis oriented horizontally and/or vertically and/or a combinations thereof, i.e. inclined. The orientation of the storage container may be selected depending on the application and the spatial limitations at the site for the storage container.

The first end comprises at least one first fluid opening and the second end comprises at least one second fluid opening. However, each end may comprise any suitable number of fluid openings for the current application. For example, multiple fluid openings may be beneficial if heat from the same storage container may be supplied to different industrial processes, or to different parts within the same industrial process. More than one fluid opening may also be beneficial for charging, e.g. in the case that heat is supplied to the storage container from more than one heating device. The storage container is thus an enclosure comprising the first and the second fluid opening for introducing the heat transfer fluid into and extracting the same from the container.

The heat storage container may according to examples be at least partly cylindrical and/or conical. According to other examples, the storage container may be at least partly block shaped or pyramidal or having any other suitable geometric shape. The inner walls may constitute periphery boundaries of a storage chamber configured to accommodate the heat storage elements. Thus, the inner walls may surround the bed of heat storage elements. The inner walls may be referred to as inner circumferential walls or inner perimeter walls, depending on the shape of a cross sectional area of the storage container. The cross sectional area may extend in a plane perpendicular to the axis. According to an example, the inner walls may also be referred to inner periphery wall. The inner periphery wall may thus comprise the outline of any suitable shape of the cross sectional area of the storage container, even irregular, asymmetrical and organic shapes. According to an example, the inner walls may extend between the first end and the second end of the storage container in parallel with the axis.

The bed of heat storage elements may comprise a set of heat storage elements at least partly stacked on one another. The bed of heat storage elements may be arranged inside the storage container between the inner walls. According to an example, the bed of heat storage elements may comprise a packed-bed of heat storage elements. According to an example, the bed of heat storage elements may comprise randomly organized heat storage elements. The bed of heat storage element may comprise heat storage elements and void space, wherein the void space may accommodate the heat transfer fluid. The bed of heat storage element may thus occupy the entire space between the inner walls.

The heat storage elements are in a solid state in the charging mode, the storing mode and the discharging mode. Thus, there is no phase change within the heat storage elements. This is beneficial since phase change materials usually has to be encapsulated in order to be used in a thermal storage application. Phase change material may thus be more difficult to handle and more expensive to manufacture. Thus, by using heat storage elements in solid state in the charging mode, the storing mode and the discharging mode, problems associated with handling liquids, such as containment and leakage are decreased. A solid state of the heat storage elements throughout the different modes may also reduce the strain and fatigue which the storage container and the heat storage elements are exposed to, due to the frequent temperature cycling.

The heat transfer fluid is in a gaseous state in the charging mode, the storing mode and the discharging mode. Having the heat transfer fluid in gaseous state in all modes may be beneficial since there is no phase change. A heat transfer fluid without phase change may be easier to control since the change in volume due to thermal expansion of the heat transfer fluid is relative small, compared to heat transfer fluid going through phase change. A gaseous state of the heat transfer fluid throughout the different modes may also reduce the strain and fatigue which the heat storage elements and the storage container are exposed to, due to the frequent temperature cycling. According to examples, the heat transfer fluid may comprise air and/or carbon dioxide (CO₂). These heat transfer fluids are favourable since they are non-corrosive, non-toxic, non-flammable and non-explosive, available, low cost and there is no degradation after a large number of cycling. In addition, these fluids have appropriate properties for effective convective heat transfer and efficient fluid dynamics. According to other examples, the heat transfer fluid may comprise inert gases.

According to an example, the same heat transfer fluid may be used in the charging mode, the storing mode and the discharging mode. This means that the same type of gaseous heat transfer fluid is used in the charging mode, the storing mode and the discharging mode.

By allowing the heat transfer fluid to enter the storage container at one of the first and second ends through the at least one first fluid opening or the at least one second fluid opening and thereafter flow through the bed of heat storage elements to the opposite end of the storage container, the heat transfer fluid transfers heat to the heat storage elements in the charging mode and from the heat storage elements in the discharging mode by convective heat transfer. Thus, the heat transfer fluid may exit the storage container at the opposite end of the storage container. The heat transfer fluid may exit the storage container through the at least one first fluid opening or the at least one second fluid opening at the opposite end. The convective heat transfer may be affected by the choice of heat transfer fluid and the material, shape and configuration of the heat storage elements. Other aspects that may affect the convection heat transfer is the configuration of the bed, the storage container, the fluid flow and temperature of the heat transfer fluid entering the storing container in the charging mode and exiting in the discharging mode. According to an example, the heat transfer fluid is configured to enter the storage container at a pressure determined on the basis of the flow rate of the heat transfer fluid and/or the length of the bed of heat storage elements. In order to enable entry of the heat transfer fluid into the storage container, the heat transfer fluid may have to be pressurized, in order to overcome the pressure resistance in the storage container. The pressure resistance may increase with an increased length of the bed of the of heat storage elements, and consequently, an increase in pressure of the heat transfer fluid may thus be needed in order to overcome the internal pressure in the storage container, and enable and control the fluid flow through the bed of heat storage element.

According to an example, the heat transfer fluid may be configured to enter the storage container at a temperature of at least 500°C in the charging mode, wherein the temperature of the heat transfer fluid entering the storage container in the charging mode may be controlled by a heating device. Thus, according to an example, the thermal storage system further comprises a heating device for heating the heat transfer fluid entering the storage container in the charging mode. According to an example, the heating device may comprise an electrical heater. The electric heater may be powered by renewable energy, such as wind or solar power. Thereby, fossil free heating is achieved. Alternatively, the heating device may comprise other types of heaters, such as boilers or furnaces. According to another example, the heating device may comprise an industrial process expelling heat. This means that heat expelled from an industrial process may be used for heating of the heat transfer fluid before it enters the storage container in the charging state.

According to an example, the heat storage system as disclosed herein is configured for storing temperatures in the range from 500°C to 1300°C. The heat transfer fluid is configured to enter the storage container at an inlet charging temperature of at least 500°C in the charging mode. According to examples, the heat transfer fluid may be configured to enter the storage container at a temperature, i.e. an inlet charging temperature, of at least 600°C, or 700°C, or 800°C, or 900°C, or 1000°C, or 1100°C, or 1200°C, or 1300°C in the charging mode. A higher temperature of the ingoing heat transfer fluid in the charging mode enables a higher temperature of the outgoing heat transfer fluid in the discharging mode. A high output temperature is essential to meet the demand for certain industrial processes and applications.

According to an example, the heat storage elements consist of iron ore pellets. According to an example, the iron ore pellets are iron ore pellets for blast-furnaces. Iron ore pellets are favourable since they are non-corrosive, non-toxic, non-flammable and non-explosive, chemically stable, available and low cost. Iron ore pellets have a high heat resistance. In addition, iron ore pellets can handle a large number of cycling without significant degradation. Furthermore, iron ore pellets have appropriate thermodynamic properties for effective convective heat transfer and high thermal conductivity. Since iron are pellets are designed to handle high temperatures in blast furnaces, the exposure to high temperatures is not an issue and no specific modifications of the iron ore pellets is needed in order to be used in the thermal storage system. By using iron ore pellets already on the market for blast-furnaces, high and predictable availability and quality is thus assured, at low cost. This means that there is no need for a customized "heat storage" product for the thermal storage according to the present disclosure. The heat storage elements may be bought in large quantities as bulk goods, which is cost effective. Thus, using iron ore pellets as heat storage elements significantly increases the potential for upscaling, compared to using other types of heating storing elements.

The iron ore pellets may be manufactured from iron ore concentrate. The iron ore pellets may comprise iron ore concentrate and a binder, such as a clay mineral. According to an example, the binder may comprise bentonite or a similar binder. According to an example, the iron ore pellets comprise additives. Thus, the pellets may be manufactured by a pelletizing process where iron ore concentrate is mixed with additives and binder and then rolled together into balls. According to an example, the iron ore pellets may be sintered. This means that the pellets may be heated so that the iron ore particles of the iron ore concentrate may partially melt together. Due to the robustness of iron ore pellets, efficient load bearing properties is achieved which important in a bed of heat storage elements, since the heat storage elements at the bottom of the bed have to be able to carry the weight of the heat storage elements arranged on top. Thus, with increased height of the bed, the stress and strain at the bottom of the bed increases. The weight of a bed of heat storage elements comprising iron ore pellets may be more than 4 tons for e.g. a cylindrical bed of heat storage element with a height of 5 meters and a diameter of 0.7 meter. Consequently, it is utterly important that the heat storage elements are rigid and strong, even after being exposed to frequent cycling at high temperatures, such as temperatures of at least 500°C.

An iron ore product in pellets form assures a high predictability regarding the content and properties of the finished product. Using pelletized iron ore is beneficial, since the pelletizing enables an iron ore product having uniform and high iron content, high stability and strength, uniform size and shape, low degree of moisture or contaminates and a high melting point. The size and shape of the iron ore pellets and the high iron content enable efficient heat transfer between the heat storage elements and the heat transfer fluid in both the charging and discharging mode. In addition, iron ore pellets have favourable characteristics for storing of thermal energy. The iron ore pellets may according to an example comprise iron ore pellets manufacture by LKAB^{®}. According to examples, the iron ore pellets comprise an iron content of at least 40%, or at least 45%, or at least 50%, or at least 55%, or at least 60%, or at least 65%, or at least 70%, or at least 75% or at least 80%, by weight. According to examples, the iron ore pellets may comprise hematite and/or magnetite. Hematite (Fe₂O₃) and magnetite (Fe₃O₄) are iron ore oxides. Hematite and magnetite are sustainable options with suitable properties for storage of thermal heat. Generally, where examples of the present disclosure are defined in percentage by weight as disclosed herein, this may be interpreted as percentage by weight relative to the total weight of the iron ore pellets.

According to an example, the bed of heat storage elements comprises a uniform bulk of heat storage elements. This means that the bed of heat storage elements comprises large quantities of heat storage elements, not varying significantly in shape, material, quality etc. By using a uniform bulk of heat storage elements, a predictable and evenly distributed heat transfer may be achieved within the thermal storage system and thereby increased energy efficiency. Significant inconsistencies between the different heat storage elements may negatively affect the fluid flow of heat transfer fluid as well as the ability to calculate, optimize and control the charging, storing and discharging of the thermal storage system. According to a specific example, the bed of heat storage elements consists of a uniform bulk of heat storage elements.

When the thermal storage system is in operation, the thermal storage system may for example start in the charging mode. Heated heat transfer fluid is then allowed to enter the storage container at one of the first and second ends through the at least one first fluid opening or the at least one second fluid opening and flow through the bed of heat storage elements to the opposite end of the storage container. The heated heat transfer fluid entering the storage container may for example have an inlet charging temperature of 1300°C. The heat transfer fluid may exit the storage container through the first or second fluid openings arranged at the opposite end of the storage container. According to an example, the heat transfer fluid exiting the storage container may be used again. Thus, the heat transfer fluid exiting the storage container in the charging mode may be recirculated and heated again for further charging, i.e. heating, of the heat storage elements, which is energy efficient. The heat transfer fluid in the charging mode may be heated by a heating device. When the heat storing elements are suitably heated, and/or there is no energy available for heating and/or the industrial process demands energy, the charging may be ended. In this situation, at least a portion of the heat storage elements may have a temperature of 1300°C. If the thermal storage system is fully charged, essentially all of the heat storage elements may have at temperature of 1300°C. Next, the thermal storage system may be set in either the storing mode or the discharging mode.

In the discharging mode, heat transfer fluid is allowed to enter the storage container at one of the first and second ends through the at least one first fluid opening or the at least one second fluid opening and flow through the bed of heat storage elements to the opposite end of the storage container. The heat transfer fluid entering the heat storage container in the discharging mode in order to be heated by the stored heat may for example have an inlet charging temperature of 900°C. According to an example, the heat transfer fluid entering the storage container in the discharging mode may be retrieved from an industrial process. The industrial process may be the same process as the discharged heat is supplied to. Thus, the heat transfer fluid may recirculate in the discharging mode, which is energy efficient. Since the temperature of the heat transfer elements is higher than the heat transfer fluid entering the storage container in the discharging mode, due to the previous charging mode, heat is transferred from the heat storage elements to the heat transfer fluid. This means that the heat transfer fluid entering the storage container in the discharging mode is heated by the heat storage elements when flowing through the bed of heat storage elements. Thus, when the heat transfer fluid exits the storage container at the opposite end, the temperature of the heat transfer fluid is higher than when it entered the storage container. With a proper selection of parameters and sufficient charging, the outlet discharge temperature of the discharged heat transfer fluid may then be close to 1200°C. Thus, the temperature output in the discharging mode may be close to 90% of the charging and/or storing temperature in the heat storage elements.

According to an example, the thermal storage system may be set into the storing mode between the charging mode and the discharging mode. In the storing mode, the flow of heat transfer fluid through the storage container may be disabled, in order to preserve the thermal energy present in the bed of heat storage elements. The thermal storage system may also be set into a storing mode between multiple sub-sequent steps of charging, or between multiple sub-sequent steps of discharging. Consequently, the heating may be step-wise in the charging mode, based on the current availability of energy for heating. The current level of energy available for heating may depend on the grid and/or the current level of generation of renewable energy, such as solar or wind power. The discharge of heat in the discharging mode be also be step-wise, based on the current need for heat from the energy consumer, such as an industrial process or application.

By using a heat transfer fluid, which is in a gaseous state in all modes, and heat storage elements comprising iron ore pellets, which are in a solid state in all modes, efficient heat convection is achieved enabling high temperature output for energy demanding industrial processes. Thus, by means of the present disclosure, a cost- and energy efficient storage and supply of thermal energy for industrial processes are enabled while reducing the dependency on the grid and fossil fuel.

The power output from the thermal storage system may essentially be affected by the cross sectional area of the bed of heat storage elements, the size and shape of the heat storage elements, the thermal conductivity of the heat storage elements, the properties of the heat transfer fluid and the flow rate of the heat transfer fluid. The endurance of the thermal storage system may essentially be affected by the length of the bed of heat storage elements. Thus, by selecting these parameters and factors, a custom-made design of the thermal storage system may be obtained adapted to the current demands for the applicable industrial process requiring heat. With a proper design of the thermal storage system as disclose herein, approximately 90% of the thermal energy stored may be discharged at high temperatures, provided that the shape, size and thermal conductivity of heat storage elements are well selected and that the heat transfer fluid and its flow rate are properly chosen and/or controlled.

According to an example, the iron ore pellets are of a uniform shape and size. Using iron ore pellets of a uniform shape and size in the thermal storage system is favourable in many ways. A uniform shape and size has the benefit that the iron ore pellets may be more evenly heated, compared to heating elements of irregular shapes and sizes. The shape and size of the heat storage elements may also significantly affect the permeability of the heat transfer fluid through the bed of heat storage elements, and hence the pressure drop over the bed. According to an example, the iron ore pellets have a rounded shape. According to examples, the iron ore pellets are sphere-shaped and/or of an ellipsoidal shape. A uniform and/or rounded shape of the iron ore pellets, such as spherical and/or ellipsoidal, enables even distribution of heat storage elements within the bed of heat storage elements. Thus, the iron ore pellets may, due to their uniform and/or rounded shape automatically be relatively well distributed, even though they are randomly positioned in the storage container by e.g. dumping the iron ore pellets in bulk into the storage container. In addition, the void space between the iron ore pellets may also be well distributed due to the rounded and uniform shape, which is highly important in order to achieve efficient fluid flow of the heat transfer fluid through the bed of heat storage elements. A bed of heat storage elements comprising elements of no particular shape and size, such as crushed bits, of e.g. rocks, would have large variations in fluid flow and significant temperature difference between the different heat storage elements, and thereby a less efficient thermal storage system.

According to an example, the iron ore pellets are sphere-shaped and have a uniform diameter. By using uniform sphere-shaped heat storage elements with high thermal conductivity, such as iron ore pellets, an efficient heat transfer may be obtained when the heat transfer fluid flows through the bed of heat storing elements. Thereby, an efficient thermal storage system is achieved. According to an example, the uniform diameter is in the range of 1 - 5 cm (centimetres). According to other examples, the uniform diameter is in the range of 1 - 4 cm, or 1 - 3 cm, or 1 - 2 cm. According to a specific example, the uniform diameter is 1.2 cm. By using a relatively small-sized heat storage elements, an efficient charging, storing and discharging of is obtained, while the time needed for charging is significantly reduced, compared to when using larger heat storage elements. Thereby, an efficient thermal storage system is obtained.

According to an example, the iron ore pellets comprise hematite, wherein hematite comprises at least half of the total iron content, by weight, of the iron ore pellets. According to an example, the iron ore pellets comprise iron oxide, wherein at least 70%, or 75%, or 80%, or 85%, or 90%, or 95%, by weight, of the iron oxide in the iron ore pellets is hematite. Hematite is harmless to the environment and non-toxic. Hematite is highly available at the current market, relatively cheap, chemically stable even after many cycles of heating and cooling, non-flammable, and resistant to deformation, brittleness and release of particles (dust) during thermal cycling. In addition, hematite have high heat resistance. Thus, by means of the use of iron ore pellets comprising a relatively high amount of hematite, the requirements for high temperature applications, such as industrial processes demanding temperatures above 1000°C may successfully be satisfied. The thermal conductivity of hematite is significantly higher than the thermal conductivity of e.g. magnetite. A higher thermal conductivity may enable a more energy efficient thermal storage system, with increased heating capacity. Iron ore pellets comprising a relatively high hematite content may have a relatively high energy density in comparison with other mineral pellets, favourable thermal physical characteristics and heat retaining properties. Iron ore pellets with high hematite content may increase the overall quality of the iron ore pellets and a more robust and efficient thermal storage system may be achieved. Thereby, an increased potential for upscaling and high temperature applications may be achieved, compared to using other types of heat storing elements.

The heat capacity of hematite may be in the interval 0.88 - 1.06 kJ/kg·K for temperatures above about 300 °C, according to a scientific data source. However, the interval may slightly differ based on the applied scientific data source. Note that there may not be a monotonic increase with temperature. According to a specific example, the iron ore pellets may have an assumed bulk density of around 2.3 kg/dm³. The assumed bulk density may be experience-based. On the basis of the above scientific data, the bulk density assumption and the assumption that the iron ore pellets consist of 100wt% hematite (i.e. no binders or additives etc.), a corresponding energy density for the bed of heat storage elements may be estimated to be in the interval 2.0 - 2.4 MJ/m³·K. Since the bulk density may be experience-based, if a spread (or uncertainty) in bulk density is assumed, the interval range for energy density may become significantly wider. Thus, according to examples, the energy density for the bed of heat storage elements may be in the interval 1.5 - 3 MJ/m³·K, or 1.0 - 3.5 MJ/m³·K.

According to an example, the flow rate of the heat transfer fluid is controlled by means of at least one controllable flow device. The at least one controllable flow device may control the flow of heat transfer fluid entering and/or exiting the storage container in the charging and/or discharging mode. The at least one controllable flow device may be arranged in fluid connection with the first opening and/or the second fluid opening. According to an example, the same at least one controllable flow device may be used in both the charging mode and the discharging mode. According to an example, separate controllable flow devices may be used in the charging mode and discharging mode. According to examples, the at least one controllable flow device may comprise a pump, a fan or any other device suitable for controlling the flow of the heat transfer fluid.

According to an example, the heat transfer fluid is disabled to flow through the storage container in the storing mode. According to examples, the heat transfer fluid may be disabled to flow through the storage container by closing valves arranged in fluid connection with the at least one first fluid opening and/or the at least one second fluid opening. Thereby, heat transfer fluid is unable to enter and/or exit the storage container. Alternatively, the heat transfer fluid flow may be disabled by stopping the feed of the heat transfer fluid. The feed of the heat transfer fluid may thus according to an example be stopped by controlling the at least one controllable flow device. By disabling the flow of heat transfer fluid, the thermal convection in the storage container may be reduced. The collected heat in the heat storage elements is then stored in the heat storage element until discharge of heat, or further charging.

According to an example, the storage container may comprises at least one distribution compartment arranged between the at least one first fluid opening and the bed of heat storage elements and/or between the at least one second fluid opening and the bed of heat storage elements. The at least one distribution compartment may be beneficial for distributing the heat transfer fluid over the entire cross sectional area of the bed of heat transfer elements. The at least one distribution compartment may also be beneficial for even distribution of the heat transfer fluid from the storage container to the at least first and/or second fluid openings. Thus, the at least one distribution compartment may enhance the distribution of heat transfer fluid and thus increase the energy efficiency of the thermal storage system. The at least one distribution compartment and the bed of heat storage elements may be separated by a perforated plate, net or similar device allowing the heat transfer fluid to pass.

According to an example, the storage container comprises insulation. By means of the insulation, the loss of thermal energy is decreased in the charging, the discharging and the storing mode. The insulation thus constitute a thermal barrier, which improves the energy efficiency of the thermal storage system. Thereby, a more efficient thermal storage system is achieved. According to an example, the insulation may comprise refractories. Refractories may comprise materials that are resistant to decomposition by heat, pressure, or chemical attack, and retains strength and form at high temperatures. Refractories may be inorganic, non-metallic, porous, and heterogeneous. According to an example, the refractories may comprise heat-resisting ceramic material. According to an example, the refractories may comprise concrete. According to examples, the refractories may comprise oxides of for example silicon, aluminium, magnesium, calcium, and zirconium. According to examples, the refractories may comprise non-metallic ceramic or brick-like blocks.

According to an example, the inner walls of the storage container comprises insulation. This may for example mean that an inner surface of the insulation constitute the inner walls of the heat storage container. The inner walls may be exposed to high temperatures and frequent cycling. By using insulation as inner walls, it is ensured that the inner walls are capable of enduring cycling at high temperatures. Inner walls consisting of e.g. steel in high temperature application may not be able to cope with such harsh conditions without cracking or breaking. According to an example suitable for lower temperatures, the inner walls may comprising steel. The inner walls, comprising e.g. steel, may then be surrounded by insulation. Thus, the insulation may then be arranged on the outside of the inner walls. According to an example, the insulation may enclose the inner walls and at least partly the first end and at least partly the second end of the storage container. According to an example, the insulation may enclose at least partly the at least one distribution compartment. According to an example, the storage container may comprise outer walls, wherein the outer walls surround the inner walls. According to such an example, the insulation may be arranged between the inner walls and the outer walls. According to an example, the outer walls may comprise steel or other suitable metals. According to an example, the thermal storage container may be arranged in rock. In such a configuration, the inner walls may comprise internal surfaces of a chamber excavated in solid rock. According to an example, no separate insulation may be needed if solid rock constitute the inner walls. Thus, in such a configuration, the rock may act as insulation. By means of insulation, the energy losses through the inner walls and/or outer walls by thermal conductance are reduced and the heat storage in the walls due to thermal capacity is reduced, which lowers start-up and shutdown losses.

According to an example, the bed of heat storage elements has a length extending along the axis and a width extending perpendicular to the axis. The length of the bed of the heat storage elements may correspond to the endurance of the thermal storage system. This mean that the length of the bed of heat storage elements corresponds to the time period that the thermal storage system is able to discharge heat in the discharging mode. Consequently, with increasing length of the bed, the time period for efficient discharge of heated transfer fluid increases. The endurance of the thermal storage system may thus be quantified in e.g. hours, days or weeks. According to examples, the length of the bed of heat storage elements may be at least 0.7 meters, or at least 1.5 meters, or at least 3 meters, or at least 5 meters, or at least 10 meters, or at least 30 meters. As the length of the bed of heat storage elements increases, the endurance of the thermal storage system may increase.

The cross sectional area of the bed of heat storage element may affect the power output of the thermal storage system. The power output of the thermal storage system may be quantified in e.g. watt (W), which represent the rate at which energy may be generated, i.e. discharged, from the thermal storage system in energy per unit time. The cross sectional area may extend perpendicular to the axis of the storage container. In an example where the bed of heat storage element is cylindrical, the width of the bed of heat storage elements may thus correlate to the power output of the thermal storage system.

According to an example, the bed of heat storage elements has a length extending along the axis and a width extending perpendicular to the axis, wherein the width of the bed of heat storage elements is at least 0.7 meters. This means that the narrowest width of the bed of heat storage elements may be at least 0.7 meters. A width of at least 0.7 meters may reduce the impact of edge effects that may arise close to the inner walls. Edge effect may arise along the inner walls due to energy losses through the inner walls and disturbances of the flow of heat transfer fluid etc.

However, when the width is 0.7 meters or wider, the energy losses due to edge effects are significantly reduced, and a more energy efficient thermal storage system is achieved. According to an example, the distance between the inner walls of the storage container is at least 0.7 meters. According to an example, the inner walls extend along the bed of heat storage elements.

According to an example, the bed of heat storage elements has a length to width ratio of 1:1 to 5:1. This means that the bed of the heat storage elements may be as long as the bed is wide, or having a length up to five times longer than the bed's width. Such length to width ratio may be favourable in order to achieve an efficient thermal storage system.

According to an example, the bed of heat storage elements has a cylindrical shape extending along the axis, wherein the axis is arranged vertically or horizontally. Thus, the bed of the heat storage element and the storage container may be arranged either vertically or horizontally, depending on the application and the available space. A cylindrical shape of the bed of heat storage elements is a robust geometrical configuration without corners enabling efficient and even flow of heat transfer fluid through the bed of heat storage elements, which facilitates effective heat transfer and an efficient thermal storage system.

According to example, the inner walls of the storage container has a cylindrical shape. Thus, the inner walls may be inner circumferential walls. According to an example, the inner walls of the storage container has a cylindrical shape extending along the axis, wherein the axis is arranged vertically or horizontally. According to an example, the bed of heat storage elements has a diameter of at least 0.7 meters. Thus, the width may correspond to the diameter of the bed of heat storage elements.

According to example, the bed of heat storage elements has a shape of a frustum, wherein the widest part of the frustum is directed vertically upwards. This means that the inner walls are arranged at an inclined angle in relation to the axis. According to examples, the inclined angle in relation to the axis is at least 0.5°, or at least 1°, or at least 3°, or at least 5°. By having a geometrical configuration that widens in a direction towards the top part, and is narrower toward the bottom part, the inner walls may carry at least a part of the vertical load of the bed of heat storage elements. Consequently, the strain and stress on the bottom of the storage container may be reduces. In addition, a geometrical configuration with inclining inner walls may also improve the ability to cope with volume changes and/or relative movement of the heat storage elements that may occur due to the temperature cycling and thermal expansion. Thus, a more robust and reliable storage container is obtained, which enables upscaling of the thermal storage system.

According to an example, the frustum is a conical frustum or a pyramidal frustum. The choice of a conical or a pyramidal frustum may be based on the space available and the manufacturing method of the storage container. According to an example, the bed of heat storage elements has a frustoconical shape, wherein the widest part of the frustoconical shape is directed vertically upwards. According to an example, the frustoconical shape of the bed of heat storage elements extends along the axis, wherein the axis is arranged vertically. According to an example, the longitudinal extension of the storage container extends in a vertical direction and the inner walls of the storage container has a frustoconical shape. According to an example, the inner walls of the storage container is shaped as a truncated cone with the smallest cross-section area towards the bottom of the storage container.

According to an example, the axis is arranged vertically and the bed of heat storage elements has a cross sectional area arranged perpendicular to the axis, wherein the cross sectional area increases along the axis in an upward direction. Thus, the bed of the heat storage elements may thus have any geometrical shape of the cross sectional area, even organic and/or asymmetric. This configuration has the same benefits as previously mentioned for the bed of heat storage elements shaped as a frustum with widest part of the frustum directed vertically upwards.

According to an example, a thermal gradient zone arises along the axis in the bed of heat storage elements in the discharging mode, wherein the thermal gradient zone is positioned between a low temperature zone having the same temperature as the heat transfer fluid entering the storage container and a high temperature zone having the same temperature as the heat transfer fluid exiting the storage container, wherein an extent of the thermal gradient zone along the axis is controlled by a flow rate of the heat transfer fluid and/or the temperature of the heat transfer fluid entering the storage container and/or the temperature difference between the heat transfer fluid entering the storage container and a current top temperature of the heat storage elements.

Thus, the thermal gradient zone may have a temperature gradient that ranges between the inlet discharging temperature of the heat transfer fluid entering the storage container and the outlet discharging temperature of the heat transfer fluid exiting the storage container in the discharging mode. The physical length of the thermal gradient zone along the axis may highly relate to the relative amount of energy that can be discharged from the thermal storage system at a temperature relatively close to the storage temperature. The storage temperature may refer to the highest temperature in the bed of heat storage elements prior to discharge. By being able to control the extent of the thermal gradient zone, efficient discharge of heat may thus be enabled. Charging and discharging of heat will move the thermal gradient zone along the axis of the storage container.

According to an example, the extension of the thermal gradient may be decreased by increasing the flow rate of the heat transfer fluid. Due to the increased flow rate, the thermal convention increases and a more efficient heat transfer may be achieved. According to an example, the flow rate of the heat transfer fluid may be controlled by means of the at least one controllable flow device, as previously mentioned.

According to an example, the temperature of the heat transfer fluid entering the storage container in the discharging mode may be determined by a first temperature sensor. With increased temperature of the heat transfer fluid entering the storage container in the discharging mode, the extent of the thermal gradient zone may decrease. According to an example, the temperature difference between the heat transfer fluid entering the storage container in the discharging mode and a current top temperature of the heat storage elements may be determined on the basis of the first temperature sensor and at least one second temperature sensor. As previously mentioned, the inlet discharging temperature of the heat transfer fluid entering the storage container in the discharging mode may be determined by the first temperature sensor. The at least one second temperature sensor may determine the temperature of the heat transfer fluid exiting the storage container in the discharging mode and/or the current top temperature. The current top temperature may correspond to the highest temperature present in the bed of heat storage elements in the discharging mode. Thus, the current top temperature may be determined by the at least one second temperature sensor. Alternatively, the current top temperature may be estimated on the basis of the temperature of the heat transfer fluid exiting the storage container in the discharging mode, which may be determined by the at least one second temperature sensor. According to an example, the current top temperature may relate to the outgoing discharging temperature of the heat transfer fluid exiting the storage container in the discharging mode. With an increased temperature difference between the heat storage elements and the heat transfer fluid, the extent of the thermal gradient zone increases. Thus, by altering the flow rate of the heat transfer fluid and/or the temperature of the heat transfer fluid entering the storage container and/or the temperature difference between the heat transfer fluid entering the storage container and a current top temperature of the heat storage elements, the extent of the thermal gradient zone along the axis may be controlled. Thereby, the amount of energy to be discharged from the thermal storage system at a temperature relatively close to the storage temperature may be controlled.

According to an example, the extent of the thermal gradient zone along the axis may be affected by the axial position where the thermal gradient zone is located. Closer to the end of the storage container where the heat transfer fluid exits the storage container in the discharging mode, the extent of the thermal gradient zone increases. According to an example, the extent of the thermal gradient zone along the axis is affected by the length of the bed of the heat storage elements. A longer bed may enable that the thermal gradient zone propagates and extends further along the axis, compared to a shorter a bed.

According to an example, the extent of the thermal gradient zone along the axis is less than 50% of the length of the bed of heat storage elements in the discharging state. It is desirable to control that the thermal gradient zone does not extend too far, since a large extension of the thermal gradient zone means that a large zone of the bed has a range of intermediate temperatures, which is thus less effective for thermal heat transfer. According to other examples, the extent of the thermal gradient zone along the axis is less than 40%, or less than 30%, or less than 20% of the length of the bed of heat storage elements in the discharging state. A relatively shorter extent of the thermal gradient zone may be an indication of effective heat transfer through thermal convection and thus in turn relate to increased energy efficiency of the thermal storage system. The thermal conductivity of the heat storage elements may also affect the extent of the thermal gradient zone. A lower thermal conductivity of the heat storage element may have the effect that the extent of the thermal gradient zone increases. A thermal gradient zone may not only arise in the discharging mode, but also in the charging mode. Thus, the thermal gradient zone in the charging mode may have a temperature gradient that ranges between the ingoing charging temperature of the heated heat transfer fluid entering the storage container and the outgoing charging temperature of the heat transfer fluid exiting the storage container.

According to an example, the heat transfer fluid may in the discharging mode exit the storage container through the same of the first and second fluid opening as the heat transfer fluid enters the storage container in the charging mode. By such a configuration, heated heat transfer fluid may be supplied and retrieved from the same end of the storage container in both the charging mode and the discharging modes. Such a set-up may be more energy efficient and enables increased control of the thermal gradient zone. Alternatively, the heat transfer fluid may in the discharging mode exit the storage container through the opposite of the first and second fluid opening as the heat transfer fluid enters the storage container in the charging mode.

According to an example, the thermal storage system comprises at least two storage containers connected in series or in parallel. By having storage containers connected in series or in parallel, a more flexible heat storage system may be achieved with increase possibilities for upscaling. Multiple smaller storage container may be favourable compared to having one large storage container, since only the number of storage containers needed to meet the current demand may be used at the same time. In addition, an existing thermal storage system comprising one storage container as disclosed herein may be expanded gradually with one storage container at the time, which enables spreading of cost and increased flexibility. In addition, multiple smaller storage containers may be more easily manufactured, build and integrated in existing industries and locations than very large ones. It may also be difficult to build a very large storage container which manage to hold the weight of large amounts of heat storage elements without breaking. Thus, the use of multiple storage container connected in series or in parallel is advantageous and enables new applications.

According to an aspect of the disclosure, a method for storing thermal energy by using a thermal storage system is provided. The thermal storage system being configured for cycling between a charging mode, a storing mode and a discharging mode. The thermal storage system comprising: a storage container extending longitudinally between a first end and a second end along an axis, wherein the first end comprises at least one first fluid opening and the second end comprises at least one second fluid opening, wherein inner walls extend between the first end and the second end of the storage container; a bed of heat storage elements arranged inside the storage container, the heat storage elements are in a solid state in the charging mode, the storing mode and the discharging mode, the heat storage elements comprises iron ore pellets; and heat transfer fluid, wherein the heat transfer fluid is allowed to enter the thermal storage system at one of the first and second ends through the at least one first fluid opening or the at least one second fluid opening and flow through the bed of heat storage elements to the opposite end of the storage container, the heat transfer fluid is in a gaseous state in the charging mode, the storing mode and the discharging mode. The method comprises the steps of: charging the thermal storage system by allowing the heat transfer fluid to flow through the bed of the heat storage elements, wherein the heat transfer fluid is at a temperature of at least 500°C when entering the storage container, whereby heat from the heat transfer fluid is transferred to the heat storage elements; storing heat in the thermal storage system by means of disabling the flow of the heat transfer fluid; and discharging heat from the thermal storage system by allowing the heat transfer fluid to flow through the bed of the heat storage elements, whereby heat from the heat storage elements is transferred to the heat transfer fluid.

According to an example, the thermal storage system being configured for cycling between a charging mode, a storing mode and a discharging mode may relate to the thermal storage system previously described herein. Thus, it is understood that all the various examples of the thermal storage system previously described also applies for the method as disclosed herein.

By means of the method for storing thermal energy comprising the charging step, the storing step and the discharging step, the thermal storage system may be charged when there is energy available and thermal energy may be discharged when energy is needed. In periods in between charging and discharging, the thermal energy may be stored.

In the charging step, the thermal storage system may be charged by allowing heat transfer fluid in a gaseous state to flow through the bed of the heat storage elements comprising iron ore pellets, wherein the heat transfer fluid may have an inlet charging temperature of at least 500°C when entering the storage container. Consequently, heat from the heat transfer fluid may be transferred to the heat storage elements so that at least a portion of the bed of heat storage elements may reach a temperature of at least 500°C.

Thus, during the charging step, heated heat transfer fluid may enter the storage container at one of the first and second ends through the at least one first fluid opening or the at least one second fluid opening and flow through the bed of heat storage elements to the opposite end of the storage container. The heat transfer fluid may exit the storage container through the first or second fluid openings arranged at the opposite end of the storage container. According to an example, the heat transfer fluid exiting the storage container at an outlet charging temperature may be reused. Thus, the heat transfer fluid exiting the storage container in the charging mode may be recirculated and heated again for further charging, i.e. heating, of the heat storage elements, which is energy efficient. The heat transfer fluid in the charging mode may be heated by a heating device. When the heat storing elements are suitably heated and/or there is no energy available for heating and/or the industrial process demand energy, the charging step may be ended. For example, if the thermal storage system is charged for a sufficient period of time by means of a transfer fluid having an inlet charging temperature of 1000 °C, at least a portion of the heat storage elements may have a temperature of 1000°C when the charging step ends. If the thermal storage system is fully charged, essentially all of the heat storage elements may have at temperature of 1000°C. From the charging step, the method may proceed to either the storing step or the discharging step.

In the storing step, the flow of heat transfer fluid through the bed of heat storage elements may be disabled in order to retain the heat present in the thermal storage system. In the storing step, the heat is preserve in the bed of heat storing elements. The heat transfer fluid present in the storage container in the storing step may still be in a gaseous state. According to an example, the storing step may take place between the charging step and the discharging step. The storing step may also occur between multiple sub-sequent steps of charging, or between multiple sub-sequent steps of discharging. During the storing step, the temperature of the heat storing element may slightly decline over time due to energy losses. However, the configuration of the thermal storage system enables efficient storage for a relatively long time.

In the discharging step, the thermal energy stored in the thermal energy system may be discharged by allowing heat transfer fluid in gaseous state to flow through the bed of the heat storage elements. Heat from the heat storage elements may thus be transferred to the heat transfer fluid. The discharged heat transfer fluid may be supplied to an industrial process. In the discharging step, heat transfer fluid enters the storage container at one of the first and second ends through the at least one first fluid opening or the at least one second fluid opening and flows through the bed of heat storage elements to the opposite end of the storage container. According to an example, the heat transfer fluid entering the storage container in the discharging mode may be retrieved from an industrial process. The industrial process may be the same process as the discharged heat is supplied to. Thus, the heat transfer fluid may recirculate in the discharging mode, which is energy efficient. The temperature of the heat transfer elements in the discharging step is higher than the inlet discharging temperature of the heat transfer fluid entering the storage container, due to previous charging step. Consequently, heat is transferred from the heat storage elements to the heat transfer fluid. This means that the heat transfer fluid entering the storage container in the discharging mode is heated by the heat storage elements when flowing through the bed of heat storage elements. Thus, when the heat transfer fluid exits the storage container at the opposite end, the temperature of the heat transfer fluid is higher than when it entered the storage container. With a proper selection of parameters and sufficient charging, the outlet discharge temperature of the discharged heat transfer fluid in the discharging step may be close to 90% of the charging temperature in the charging step and/or the storing temperature in the storing step. As an example, if the bed of heat transfer elements has been charged to a temperature of 1000°C in the charging step, relatively small energy losses have occurred during the storing step, and the heat transfer fluid entering the heat storage container in the discharging step has an inlet discharging temperature of 700°C, the heat transfer fluid discharged in the discharging step may have an outlet discharge temperature of around 900°C.

By means of the method for storing thermal energy comprising method steps wherein the heat transfer fluid is in a gaseous state in all the method steps and the heat storage elements comprising iron ore pellets in a solid state in all the method steps, efficient heat convection is achieved enabling high temperature output for energy demanding industrial processes. Thus, by means of the present disclosure, a cost- and energy efficient storage and supply of thermal energy for industrial processes are enabled while reducing the dependency on the grid and fossil fuel.

According to an example, the step of charging may comprise stepwise heating. According to an example, the step of charging may comprise heating in intervals. Stepwise heating means that the heating may be gradual in the charging mode, based on the current availability of energy for heating. The current level of energy available for heating may depend on the grid and/or the current level of generation of renewable energy, such as solar or wind power. Thus, the heating may occur at intervals. The discharge of heat in the discharging mode may also be stepwise, or gradual, based on the current need for heat from an energy consumer, such as an industrial process or application. According to an example, the step of discharging may comprise discharging in intervals.

According to an example, the heat transfer fluid is configured to enter the storage container at a pressure determined on the basis of the flow rate of the heat transfer fluid and/or the length of the bed of heat storage elements. This may apply in the charging step and/or in the discharging step. In order to enable entry of the heat transfer fluid into the storage container, the heat transfer fluid may have to be pressurized, in order to overcome the pressure resistance in the storage container. The pressure resistance may increase with an increased length of the bed of the of heat storage elements, and consequently, an increase in pressure of the heat transfer fluid may thus be needed in order to overcome the internal pressure in the storage container, and enable and control the fluid flow through the bed of heat storage element.

According to an aspect of the disclosure, the use of a thermal storage system for storage and supply of heat for calcining processes and/or steam cycle processes and/or paper/pulp processes and/or district heating networks is provided. The thermal storage system as disclosed herein may also be used for metal manufacturing and/or the mining industry and any other suitable applications.

By using the thermal storage system as disclosed herein comprising a storage container, a bed of heat storage elements comprising iron ore pellets and a heat transfer fluid, a cost- and energy efficient storage and supply of heat for industrial processes is achieved, while reducing the dependency on the grid and fossil fuel.

The present disclosure will now be further illustrated with reference to the appended figures, wherein for the sake of clarity and understanding of the disclosure some details of no importance are deleted from the figures. Moreover, the figures shall not be considered drawn to scale as some features may be exaggerated in order to more clearly illustrate the disclosure.

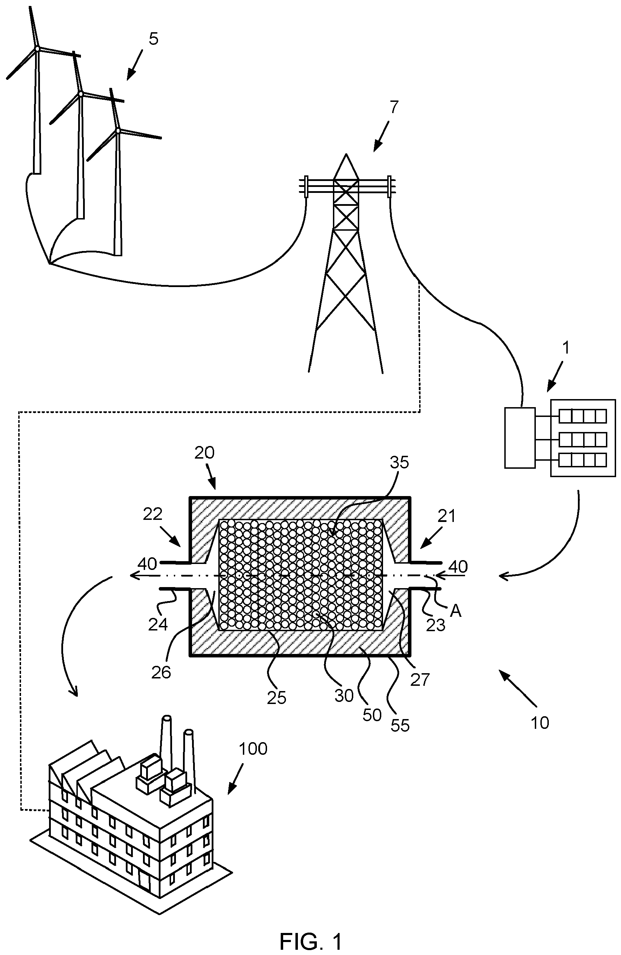

Figure 1 schematically illustrates an overview of a thermal storage system 10 for an industrial process 100 according to an example of the present disclosure. The thermal storage system 10 may be suitable for industrial processes, such as calcining processes and/or steam cycle processes and/or paper/pulp processes and/or district heating networks. The thermal storage system 10 may be configured for cycling between a charging mode, a storing mode and a discharging mode. By cycling the thermal storage system 10 between a charging mode, a storing mode and a discharging mode, thermal energy may repeatedly be loaded, stored and supplied to an industrial process 100. The heat storage system 10 may cycle between the different modes in any suitable order and degree. For example, the thermal storage system 10 may be loaded in the charging mode when there is energy available for heating, and heat may be discharged when there is a demand for heat by the industrial process 100. In between these occasions, the heat may be stored in the thermal storage system 10. However, if there is instant demand for discharge, there may be no significant storing time between the charging and discharging. The thermal storage system 10 may not be completely charged and/or discharged for altering between the different modes. According to an example, the thermal storage system 10 may be charge to a degree corresponding to the current accessibility of energy for heating.

The thermal storage system 10 comprises: a storage container 20 extending longitudinally between a first end 21 and a second end 22 along an axis A, wherein the first end 21 comprises at least one first fluid opening 23 and the second end 22 comprises at least one second fluid opening 24, wherein inner walls 25 extend between the first end 21 and the second end 22 of the storage container 20; a bed 35 of heat storage elements 30 arranged inside the storage container 20, the heat storage elements 30 are in a solid state in the charging mode, the storing mode and the discharging mode; and a heat transfer fluid 40, wherein the heat transfer fluid 40 is allowed to enter the storage container 20 at one of the first and second ends 21, 22 through the at least one first fluid opening 23 or the at least one second fluid opening 24 and flow through the bed 35 of heat storage elements 30 to the opposite end 21, 22 of the storage container 20. The heat transfer fluid 40 is configured to transfer heat to the heat storage elements 30 in the charging mode and from the heat storage elements 30 in the discharging mode. The heat transfer fluid 40 is in a gaseous state in the charging mode, the storing mode and the discharging mode. The heat transfer fluid 40 is configured to enter the storage container 20 at a temperature of at least 500°C in the charging mode. The heat storage elements 30 comprise iron ore pellets.

In the example in Figure 1, the thermal storage system 10 and the industrial process 100 use wind energy as the primary source of power. A wind farm 5 may comprise a varying number of windmills, depending on their size and local wind conditions. The output from the windmills is electrical energy. Via a transmission grid 7, excess power produced by the windmills during periods of low demand from the industrial process 100 may be diverted for heating of the heat transfer fluid 40 by a heating device 1 and used in the charging mode for heating. In the example in figure 1, the heating device 1 is illustrated as an electrical heater powered by wind power, i.e. renewable energy. Stored thermal energy in the thermal storage system 10 may then be available for discharged when the demand from the industrial process 100 increases and/or there is no power available from the transmission grid 7 due to lack of wind or problems with the transmission. According to another example, all of the wind-generated power passes through the thermal heat storage system 10.

According to examples, the storage container 20 may be configured to be arranged with the axis A oriented horizontally and/or vertically and/or a combination thereof, i.e. inclined. In figure 1, the storage container 20 is schematically illustrated with the axis A oriented horizontally.

In Figure 1, it is schematically illustrated that the first end 21 comprises at least one first fluid opening 23 and the second end 22 comprises at least one second fluid opening 24. However, each end may comprise any suitable number of fluid openings for the current application and they may be arranged in any suitable direction. The storage container 20 is thus an enclosure comprising the first and the second fluid opening 23, 24 for introducing the heat transfer fluid 40 into and extracting the same from the storage container 20.

The storage container 20 may according to examples be at least partly cylindrical and/or conical. In Figure 1, the storage container is schematically illustrated as at least partly cylindrical. According to other examples, the storage container 20 may be at least partly block shaped or pyramidal or having any other suitable geometric shape. The inner walls 25 may constitute periphery boundaries of a storage chamber configured to accommodate the heat storage elements 30. Thus, the inner walls 25 may surround the bed 35 of heat storage elements 30. The inner walls 25 may be referred to as inner circumferential walls or inner perimeter walls, depending on the shape of a cross sectional area of the storage container 20. The cross sectional area may extend in a plane perpendicular to the axis A. According to an example, the inner walls 25 may also be referred to inner periphery wall. The inner periphery wall may thus comprise the outline of any suitable shape of the cross sectional area of the storage container 20, even irregular, asymmetrical and organic shapes. According to an example, the inner walls 25 may extend between the first end 21 and the second end 22 of the storage container 20 in parallel with the axis A.

The bed 35 of heat storage elements 30 may comprise a set of heat storage elements 30 at least partly stacked on one another. The bed 35 of heat storage elements 30 may be arranged inside the storage container 20 between the inner walls 25. The bed 35 of heat storage element 30 may comprise heat storage elements 30 and void space, wherein the void space may accommodate the heat transfer fluid 40. The bed 35 of heat storage element 30 may thus occupy the entire space between the inner walls 25.

The heat storage elements 30 are in a solid state in the charging mode, the storing mode and the discharging mode. Thus, there is no phase change within the heat storage elements 30. The heat transfer fluid 40 is in a gaseous state in the charging mode, the storing mode and the discharging mode. Having the heat transfer fluid 40 in gaseous state in all modes may be beneficial since there is no phase change. According to examples, the heat transfer fluid 40 may comprise air and/or carbon dioxide (CO₂).

By allowing the heat transfer fluid 40 to enter the storage container 20 at one of the first and second ends 21, 22 through the at least one first fluid opening 23 or the at least one second fluid opening 24 and thereafter flow through the bed 35 of heat storage elements 30 to the opposite end of the storage container 20, the heat transfer fluid 40 transfers heat to the heat storage elements 30 in the charging mode and from the heat storage elements 30 in the discharging mode by convective heat transfer. Thus, the heat transfer fluid 40 may exit the storage container 20 at the opposite end of the storage container 20. The heat transfer fluid 40 may exit the storage container 20 through the at least one first fluid opening 23 or the at least one second fluid opening 24 at the opposite end. The convective heat transfer may be affected by the choice of heat transfer fluid 40 and the material, shape and configuration of the heat storage elements 30. Other aspects that may affect the convection heat transfer is the configuration of the bed 35, the storage container 20, the fluid flow and temperature of the heat transfer fluid 40 entering the storing container 20 in the charging mode and exiting in the discharging mode. According to an example, the heat transfer fluid 40 is configured to enter the storage container 20 at a pressure determined on the basis of the flow rate of the heat transfer fluid 40 and/or the length of the bed 35 of heat storage elements 30. In order to enable entry of the heat transfer fluid 40 into the storage container 20, the heat transfer fluid 40 may have to be pressurized, in order to overcome the pressure resistance in the storage container 20. The pressure resistance may increase with an increased length of the bed 35 of the of heat storage elements 30, and consequently, an increase in pressure of the heat transfer fluid 40 may thus be needed in order to overcome the internal pressure in the storage container 20, and enable and control the fluid flow through the bed 35 of heat storage element 30.

According to an example, the heat storage elements may consist of iron ore pellets.

According to an example, the iron ore pellets may be iron ore pellets for blast-furnaces. According to an example, the bed 35 of heat storage elements 30 may consist of a uniform bulk of heat storage elements 30.

According to an example, the heat storage system 10 as disclosed herein is configured for storing temperatures in the range from 500°C to 1300°C. The heat transfer fluid 10 may be configured to enter the storage container at an inlet charging temperature Cin of at least 500°C in the charging mode. According to examples, the heat transfer fluid 40 may be configured to enter the storage container at a temperature, i.e. an inlet charging temperature Cₗₙ, of at least 600°C, or 700°C, or 800°C, or 900°C, or 1000°C, or 1100°C, or 1200°C, or 1300°C in the charging mode. A higher temperature of the ingoing heat transfer fluid in the charging mode enables a higher temperature of the outgoing heat transfer fluid in the discharging mode. A high output temperature, i.e. a high outlet discharging temperature DC_{Out}, is essential to meet the demand for certain industrial processes and applications.

According to an example, the thermal storage system 10 may comprise the heating device 1 for heating the heat transfer fluid 40 entering the storage container 20 in the charging mode. According to the example illustrated in Figure 1, the heating device 1 may comprise an electrical heater powered by wind power. However, the heating device 1 may comprise other types of heaters, such as boilers or furnaces. According to another example, the heating device 1 may comprise an industrial process expelling heat. This means that heat expelled from an industrial process may be used for heating of the heat transfer fluid 40 before it enters the storage container 20 in the charging state.

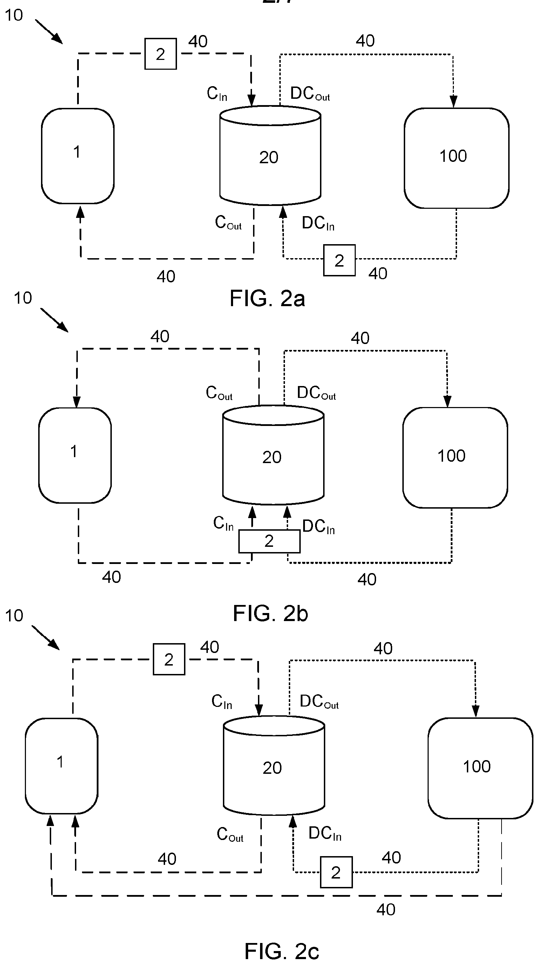

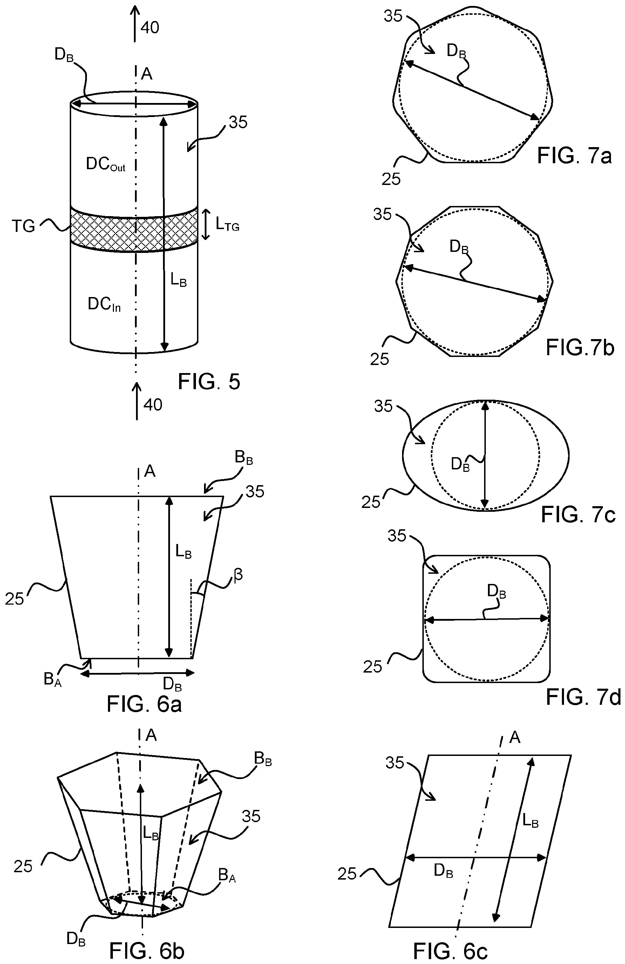

Figures 2a-2c schematically illustrate a thermal storage system 10 according to some examples of the present disclosure. The thermal storage system 10 may be configured as disclosed in Figure 1. In Figures 2a-2c, the fluid flow of heat transfer fluid 40 entering and exiting the storage container 20 is schematically illustrated as a dashed line in the charging mode, and as a dotted line in the discharging mode. According to the example shown in Figure 2a, the heat transfer fluid 40 may in the discharging mode exit the storage container 20 through the same of the first and second fluid opening 23, 24 as the heat transfer fluid 40 enters the storage container 20 in the charging mode. By such a configuration, heated heat transfer fluid 40 may be supplied and retrieved from the same end of the storage container 20 in both the charging mode and the discharging modes. Such a set-up may be more energy efficient and enables increased control of the thermal gradient zone TG (shown in Figure 5). Alternatively, the heat transfer fluid 40 may in the discharging mode exit the storage container 20 through the opposite of the first and second fluid opening 23, 24 as the heat transfer fluid 40 enters the storage container 20 in the charging mode, as illustrated in Figure 2b.

According to an example, the flow rate of the heat transfer fluid 40 may be controlled by means of at least one controllable flow device 2. The at least one controllable flow device 2 may control the flow of heat transfer fluid 40 entering and/or exiting the storage container 20 in the charging and/or discharging mode. The at least one controllable flow device 2 may be arranged in fluid connection with the first fluid opening 23 and/or the second fluid opening 24. According to an example, the same at least one controllable flow device 2 may be used in both the charging mode and the discharging mode, which is illustrated in Figure 2b. According to another example, separate controllable flow devices 2 may be used in the charging mode and discharging mode, which is illustrated in Figure 2a. According to examples, the at least one controllable flow device 2 may comprise a pump, a fan or any other device suitable for controlling the flow of the heat transfer fluid 40.

When the thermal storage system 10 is in operation, the thermal storage system 10 may for example start in the charging mode. Heated heat transfer fluid 40 is then allowed to enter the storage container 20 at one of the first and second ends 21, 22 through the at least one first fluid opening 23 or the at least one second fluid opening 24 and flow through the bed 35 of heat storage elements 30 to the opposite end 21, 22 of the storage container 20, see Figure 1 and Figures 2a-2b. The heated heat transfer fluid 40 entering the storage container 20 may for example have a charging inlet temperature Cₗₙ of 1300°C. The heat transfer fluid 40 may exit the storage container 20 through the first or second fluid openings 23, 24 arranged at the opposite end of the storage container 20. According to an example, the heat transfer fluid 40 exiting the storage container 20 in the charging mode at a charging outlet temperature C_{Out} may be recirculated and heated again for further charging, i.e. heating, of the heat storage elements 30, which is energy efficient. The heat transfer fluid 40 in the charging mode may be heated by the heating device 1. When the heat storing elements 30 are suitably heated, and/or there is no energy available for heating and/or the industrial process 100 demands energy, the charging may be ended. In this situation, at least a portion of the heat storage elements 30 may have a temperature of 1300°C. If the thermal storage system 10 is fully charged, essentially all of the heat storage elements 30 may have at temperature of 1300°C. Next, the thermal storage system 10 may be set in either the storing mode or the discharging mode.

The thermal storage system 10 in Figure 2c may be configured as the thermal storage system 10 in Figure 2a. However, according to the example shown in Figure 2c, heat transfer fluid 40 from the industrial process 100 may be supplied to the heating device 1 in the charging mode. The industrial process 100 may according to the example in Figure 2c be the same process as heat is supplied to in the discharging mode. Alternatively, the heat transfer fluid 40 supplied to the heating device 1 may be retrieved from another industrial process. Supplying excess heat transfer fluid 40, which may be relatively warm, from an industrial process to the heating device 1 for further heating prior to entering the storage container 20 may be energy efficient, since less energy may be needed for heating of the heat transfer fluid 40.

In the discharging mode, heat transfer fluid 40 may be allowed to enter the storage container 20 at one of the first and second ends 21, 22 through the at least one first fluid opening 23 or the at least one second fluid opening 24 and flow through the bed 35 of heat storage elements 30 to the opposite end 21, 22 of the storage container 20. The heat transfer fluid 40 entering the storage container 20 in the discharging mode in order to be heated by the stored heat may for example have a discharging inlet temperature DCₗₙ of 900°C. According to an example, the heat transfer fluid 40 entering the storage container 20 in the discharging mode may be retrieved from an industrial process. The industrial process may be the same process as the discharged heat is supplied to, i.e. the industrial process 100. Thus, the heat transfer fluid 40 may recirculate in the discharging mode, which is energy efficient. Since the temperature of the heat transfer elements 30 is higher than the heat transfer fluid 40 entering the storage container 20 in the discharging mode, due to the previous charging mode, heat is transferred from the heat storage elements 30 to the heat transfer fluid 40. This means that the heat transfer fluid 40 entering the storage container 20 in the discharging mode is heated by the heat storage elements 30 when flowing through the bed 35 of heat storage elements 30. Thus, when the heat transfer fluid 40 exits the storage container 20 at the opposite end, the outlet discharging temperature DC_{Out} of the heat transfer fluid 40 is higher than when it entered the storage container 20. With a proper selection of parameters and sufficient charging, the outlet discharge temperature DC_{Out} of the discharged heat transfer fluid 40 may then be close to 1200°C. Thus, the temperature output in the discharging mode may be close to 90% of the charging and/or storing temperature in the heat storage elements 30.

According to an example, the thermal storage system 10 may be set into the storing mode between the charging mode and the discharging mode. In the storing mode, the flow of heat transfer fluid 40 through the storage container 20 may be disabled, in order to preserve the thermal energy present in the bed 35 of heat storage elements 30. The thermal storage system 10 may also be set into a storing mode between multiple sub-sequent steps of charging, or between multiple sub-sequent steps of discharging. Consequently, the heating may be step-wise in the charging mode, based on the current availability of energy for heating. The current level of energy available for heating may depend on the grid and/or the current level of generation of renewable energy, such as solar or wind power. The discharge of heat in the discharging mode be also be step-wise, based on the current need for heat from the energy consumer, such as an industrial process or application.

By using a heat transfer fluid 40 which is in a gaseous state in all modes and heat storage elements 30 comprising iron ore pellets which are in a solid state in all modes, efficient heat convection is achieved enabling high temperature output for energy demanding industrial processes. Thus, by means of the present disclosure, a cost- and energy efficient storage and supply of thermal energy for industrial processes are enabled while reducing the dependency on the grid and fossil fuel.

The power output from the thermal storage system 10 may essentially be affected by the cross sectional area of the bed 35 of heat storage elements 30, the size and shape of the heat storage elements 30, the thermal conductivity of the heat storage elements 30, the properties of the heat transfer fluid 40 and the flow rate of the heat transfer fluid 40. The endurance of the thermal storage system 10 may essentially be affected by the length L_{B} of the bed 35 of heat storage elements 30. Thus, by selecting these parameters and factors, a custom-made design of the thermal storage system 10 may be obtained adapted to the current demands for the applicable industrial process requiring heat. With a proper design of the thermal storage system 10 as disclose herein, approximately 90% of the thermal energy stored may be discharged at high temperatures, provided that the shape, size and thermal conductivity of heat storage elements 30 are well selected and that the heat transfer fluid 40 and its flow rate are properly chosen and/or controlled.

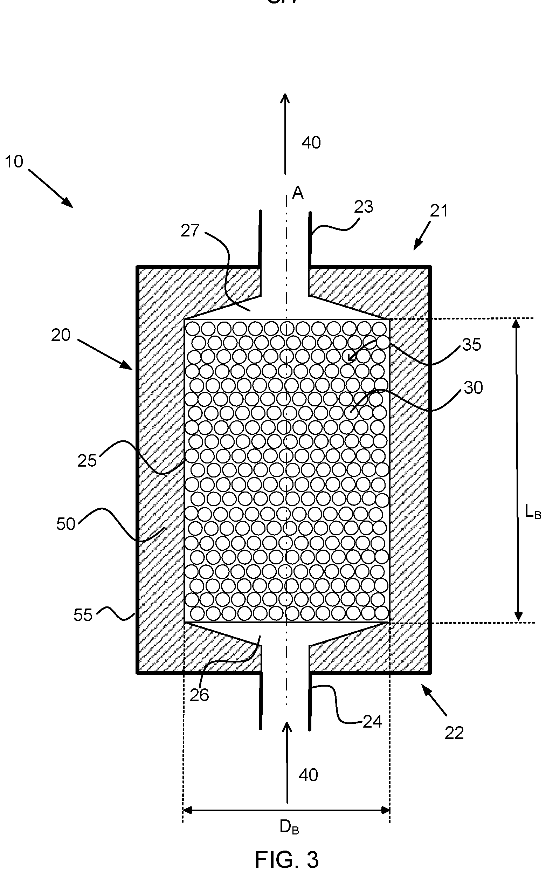

Figure 3 schematically illustrates a thermal storage system 10 according to an example of the present disclosure. The thermal storage system 10 may be configured as disclosed in Figure 1 and Figures 2a-2b. In this example, the bed 35 of heat storage elements 30 has a cylindrical shape extending along the axis A, wherein the axis A is arranged vertically.

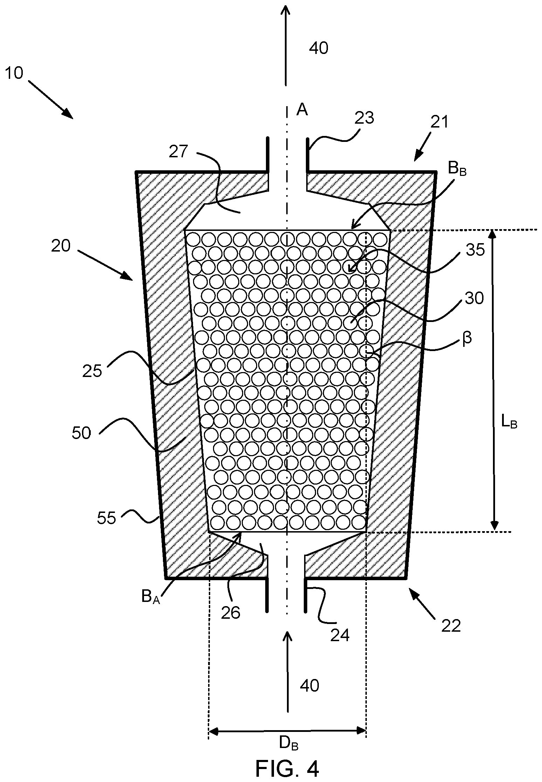

Figure 4 schematically illustrates a thermal storage system 10 according to an example of the present disclosure. The thermal storage system 10 may be configured as disclosed in Figure 1 and Figures 2a-2b and Figure 3. However, in this example, the bed 35 of heat storage elements 30 has a shape of a frustum, wherein the widest part of the frustum is directed vertically upwards. This means that the inner walls 25 are arranged at an inclined angle β in relation to the axis A. According to examples, the inclined angle β in relation to the axis A is at least 0.5°, or at least 1°, or at least 3°, or at least 5°. By having a geometrical configuration which widens in a direction towards the top part, and is more narrow toward the bottom part, the inner walls 25 may carry at least a part of the vertical load of the bed 35 of heat storage elements 30. According to examples, the frustum may be a conical frustum or a pyramidal frustum. The bed 35 of heat storage elements 30 shown in Figure 4 may have a frustoconical shape, wherein the widest part of the frustoconical shape is directed vertically upwards. The frustoconical shape of the bed 35 of heat storage elements 30 extends along the axis A, wherein the axis A is arranged vertically. As shown in Figure 4, the longitudinal extension of the storage container 20 extends in a vertical direction and the inner walls 25 of the storage container 20 has a frustoconical shape. As shown in Figure 4, the axis A is arranged vertically and the bed 35 of heat storage elements 30 has a cross sectional area B_{A}, B_{B} arranged perpendicular to the axis A, wherein the cross sectional area B_{A}, B_{B} increases along the axis A in an upward direction.

As schematically illustrated in Figure 1, Figure 3 and Figure 4, the iron ore pellets may have a uniform shape and size. The iron ore pellets may have a rounded shape. The iron ore pellets may be sphere-shaped and/or of an ellipsoidal shape. The iron ore pellets may be sphere-shaped and have a uniform diameter. According to an example, the uniform diameter may be in the range of 1 - 5 cm.

In Figure 1, Figure 3 and Figure 4, it is schematically illustrated that the storage container 20 may comprises at least one distribution compartment 26, 27 arranged between the at least one first fluid opening 23 and the bed 35 of heat storage elements 30 and/or between the at least one second fluid opening 24 and the bed 35 of heat storage elements 30. The at least one distribution compartment 26, 27 may be beneficial for distributing the heat transfer fluid 40 over the entire cross sectional area of the bed 35 of heat transfer elements 30. The at least one distribution compartment 26, 27 may also be beneficial for even distribution of the heat transfer fluid 40 from the storage container 20 to the at least first and/or second fluid openings 23, 24. Thus, the at least one distribution compartment 26, 27 may enhance the distribution of heat transfer fluid 40 and thus increase the energy efficiency of the thermal storage system 10. The at least one distribution compartment 26, 27 and the bed 35 of heat storage elements 30 may be separated by a perforated plate, net or similar device allowing the heat transfer fluid 40 to pass.

According to an example, the storage container 20 comprises insulation 50. By means of the insulation 50, the loss of thermal energy is decreased in the charging, the discharging and the storing mode. The insulation 50 thus constitute a thermal barrier, which improves the energy efficiency of the thermal storage system 10. Thereby, a more efficient thermal storage system 10 is achieved. According to an example, the insulation 50 may comprise refractories. In Figure 1, Figure 3 and Figure 4, it is schematically illustrated that the inner walls 25 of the storage container 20 may comprise insulation 50. This may for example mean that an inner surface of the insulation 50 constitute the inner walls 25 of the storage container 20. By using insulation as inner walls 25, it is ensured that the inner walls are capable of enduring cycling at high temperatures. However, according to an example suitable for lower temperatures, the inner walls may comprise steel. The inner wall 25, comprising e.g. steel, may then be surrounded by insulation 50. Thus, the insulation 50 may then be arranged on the outside of the inner walls 25. According to an example, the insulation 50 may enclose the inner walls 25 and at least partly the first end 21 and at least partly the second end 22 of the storage container 20. The insulation 50 may enclose at least partly the at least one distribution compartment 26, 27. The storage container 20 may comprise outer walls 55, wherein the outer walls 55 surround the inner walls 25. According to such an example, the insulation 50 may be arranged between the inner walls 25 and the outer walls 50. According to an example, the outer walls 55 may comprise steel or other suitable metals.

Figure 5 schematically illustrates details of a thermal storage system 10 according to an example of the present disclosure. The bed 35 of heat storage elements 30 as shown in Figure 5 may be configured as previously disclosed in Figure 3. Thus, in this example, the bed 35 of heat storage elements 30 has a cylindrical shape extending along the axis A, wherein the axis A is arranged vertically. As also shown in Figure 3 and Figure 4, the bed 35 of heat storage elements 30 has a length L_{B} extending along the axis A and a width D_{B} extending perpendicular to the axis A. The length L_{B} of the bed 35 of the heat storage elements 30 may correspond to the endurance of the thermal storage system 10. According to examples, the length L_{B} of the bed 35 of heat storage elements 30 may be at least 0.7 meters, or at least 1.5 meters, or at least 3 meters, or at least 5 meters, or at least 10 meters, or at least 30 meters. As the length L_{B} of the bed 35 of heat storage elements 30 increases, the endurance of the thermal storage system 10 may increase.

The cross sectional area of the bed 35 of heat storage element 30 may affect the power output of the thermal storage system 10. The cross sectional area may extend perpendicular to the axis A of the storage container 20. In the example in Figure 5 where the shape of the bed 35 of heat storage element 30 is a right circular cylinder, the width D_{B} of the bed 35 of heat storage elements 30 may thus correlate to the power output of the thermal storage system 10.

Figures 6a, 6b and 6c schematically illustrate details of a thermal storage system 10 according to some examples of the present disclosure. The bed 35 of heat storage elements 30 as shown in Figure 6a may be configured as previously disclosed in Figure 4. In Figures 6a and 6b, the bed 35 of heat storage elements 30 has a shape of a frustum, wherein the widest part of the frustum is directed vertically upwards. Figure 6a shows a side view of a conical frustum and Figure 6b shows a perspective view of a pyramidal frustum. Figure 6c shows a side view of a bed 35 of heat storage elements 30 in the shape of an oblique circular cylinder.

Figures 7a, 7b and 7c schematically illustrate details of a thermal storage system 10 according to some examples of the present disclosure. Figures 7a, 7b and 7c schematically illustrates the cross sectional area of different examples of geometrical configurations of the bed 35 of heat storage elements 30. Figure 7a shows a bed 35 with a cross sectional area in the shape of polygon with rounded corners. Figure 7b shows a bed 35 with a cross sectional area in the shape of decagon. Figure 7c shows a bed 35 with a cross sectional area in the shape of ellipse. Figure 7d shows a bed 35 with a cross sectional area in the shape of square with rounded corners. Thus, the cross sectional area of the bed 35 of the heat storage elements 30 may have different geometric shapes.

According to an example, the width D_{B} of the bed 35 of heat storage elements 30 may be at least 0.7 meters. This means that the narrowest width D_{B} of the bed 35 of heat storage elements 30 may be at least 0.7 meters, as illustrated in Figures 6a-6c and Figures 7a-7d. A width D_{B} of at least 0.7 meters may reduce the impact of edge effects that may arise close to the inner walls 25. The inner walls 25 may extend along the bed 35 of heat storage elements 30. This means that the distance between the inner walls 25 of the storage container 20 may be at least 0.7 meters. According to an example, the bed 35 of heat storage elements 30 has a length L_{B} to width D_{B} ratio of 1:1 to 5:1.

Figure 5 schematically illustrates a thermal gradient zone TG arises along the axis A in the bed 35 of heat storage elements 30 in the discharging mode, wherein the thermal gradient zone TG is positioned between a low temperature zone having the same temperature as the heat transfer fluid 40 entering the storage container 20 and a high temperature zone having the same temperature as the heat transfer fluid 40 exiting the storage container 20, wherein an extent L_{TG} of the thermal gradient zone TG along the axis A is controlled by a flow rate of the heat transfer fluid 40 and/or the temperature of the heat transfer fluid 40 entering the storage container 20 and/or the temperature difference between the heat transfer fluid 40 entering the storage container 20 and a current top temperature of the heat storage elements 30. The thermal gradient zone TG may have a temperature gradient that ranges between the inlet discharging temperature DCₗₙ of the heat transfer fluid entering the storage container and the outlet discharging temperature DC_{Out} of the heat transfer fluid exiting the storage container in the discharging mode.

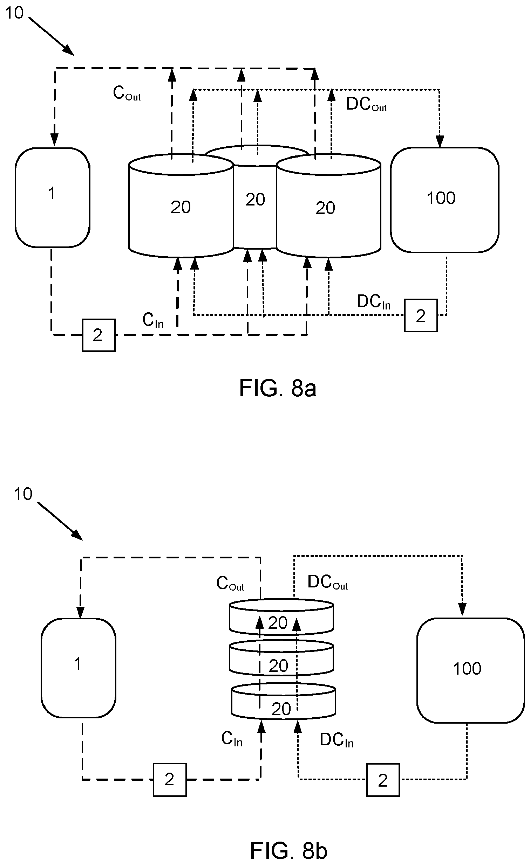

According to an example, the flow rate of the heat transfer fluid 40 may be controlled by means of the least one controllable flow device 2 (shown in Figures 2a-2b and Figures 8a-8b). According to an example, the extent L_{TG} of the thermal gradient zone TG along the axis A is less than 50% of the length L_{B} of the bed 35 of heat storage elements 30 in the discharging state. According to other examples, the extent L_{TG} of the thermal gradient zone TG along the axis A may be less than 40%, or less than 30%, or less than 20% of the length L_{B} of the bed 25 of heat storage elements 30 in the discharging state.

Figures 8a-8b schematically illustrate a thermal storage system 10 according to some examples of the present disclosure. The storage container 20 and the bed 35 may be configured as disclosed in Figure 1, Figure 3, Figure 4, Figure 5, Figures 6a-6c and Figure 7a-7d. In Figures 8a-8b, the fluid flow of heat transfer fluid 40 entering and exiting the storage container 20 is schematically illustrated as a dashed line in the charging mode, and as a dotted line in the discharging mode. As schematically illustrated in Figures 8a-8b, the thermal storage system 10 comprising at least two storage containers 20 connected in series or in parallel. Figure 8a shows a thermal storage system 10 comprising three storage containers 20 connected in parallel. Figure 8b shows a thermal storage system 10 comprising three storage containers 20 connected in series. By having storage containers 20 connected in series or in parallel, a more flexible heat storage system 10 may be achieved with increase possibilities for upscaling.

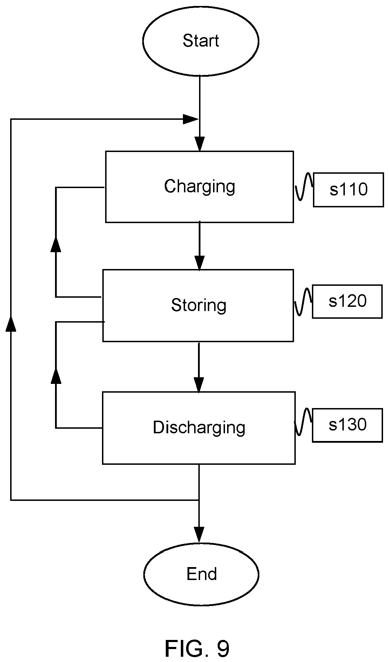

Figure 9 schematically illustrates a block diagram of a method for storing thermal energy by using a thermal storage system 10 according to an example. The method may relate to the thermal storage system 10 as disclosed in Figure 1, Figures 2a-2b, Figure 3, Figure 4, Figure 5, Figures 6a-6c, Figures 7a-7d and Figures 8a-8b. The thermal storage system 10 may be configured for cycling between a charging mode, a storing mode and a discharging mode. The thermal storage system 10 comprising: a storage container 20 extending longitudinally between a first end 21 and a second end 22 along an axis A, wherein the first end 21 comprises at least one first fluid opening 23 and the second end 22 comprises at least one second fluid opening 24, wherein inner walls 25 extend between the first end 21 and the second end 22 of the storage container 20; a bed 35 of heat storage elements 30 arranged inside the storage container 20, the heat storage elements 30 are in a solid state in the charging mode, the storing mode and the discharging mode, the heat storage elements 30 comprises iron ore pellets; and heat transfer fluid 40, wherein the heat transfer fluid 40 is allowed to enter the thermal storage system 10 at one of the first and second ends 21, 22 through the at least one first fluid opening 23 or the at least one second fluid opening 24 and flow through the bed 35 of heat storage elements 30 to the opposite end 21, 22 of the storage container 20, the heat transfer fluid 40 is in a gaseous state in the charging mode, the storing mode and the discharging mode. The method comprises the steps of: charging s120 the thermal storage system 10 by allowing the heat transfer fluid 40 to flow through the bed 35 of the heat storage elements 30, wherein the heat transfer fluid 40 is at a temperature of at least 500°C when entering the storage container 20, whereby heat from the heat transfer fluid 40 is transferred to the heat storage elements 30; storing s130 heat in the thermal storage system 10 by means of disabling the flow of the heat transfer fluid 40; and discharging s140 heat from the thermal storage system 10 by allowing the heat transfer fluid 40 to flow through the bed 35 of the heat storage elements 30, whereby heat from the heat storage elements 30 is transferred to the heat transfer fluid 40.

In the charging step, the thermal storage system 10 may be charged by allowing heat transfer fluid 40 in a gaseous state to flow through the bed 35 of the heat storage elements 30 comprising iron ore pellets, wherein the heat transfer fluid 40 is at a temperature of at least 500°C when entering the storage container 20. Consequently, heat from the heat transfer fluid 40 may be transferred to the heat storage elements 30 so that at least a portion of the bed 35 of heat storage elements 30 may reach a temperature of at least 500°C.

Thus, during the charging step, heated heat transfer fluid 40 may enter the storage container 20 at one of the first and second ends 21, 22 through the at least one first fluid opening 23 or the at least one second fluid opening 24 and flow through the bed 35 of heat storage elements 30 to the opposite end 21, 22 of the storage container 20. The heat transfer fluid 40 may exit the storage container 20 through the first or second fluid openings 23, 24 arranged at the opposite end of the storage container 20. According to an example, the heat transfer fluid 40 exiting the storage container 20 may be reused. Thus, the heat transfer fluid 40 exiting the storage container 20 in the charging mode at a charging outlet temperature C_{Out} may be recirculated and heated again for further charging, i.e. heating, of the heat storage elements 30, which is energy efficient. The heat transfer fluid 40 in the charging mode may be heated by a heating device 1. When the heat storing elements 30 are suitably heated and/or there is no energy available for heating and/or the industrial process 100 demands energy, the charging step may be ended. For example, if the thermal storage system 10 is charged for a sufficient period of time by means of a heat transfer fluid 40 having a charging inlet temperature Cₗₙ of 1000 °C, at least a portion of the heat storage elements 30 may have a temperature of 1000°C when the charging step ends. If the thermal storage system 10 is fully charged, essentially all of the heat storage elements 30 may have at temperature of 1000°C. From the charging step, the method may proceed to either the storing step or the discharging step.

In the storing step, the flow of heat transfer fluid 40 through the bed 35 of heat storage elements 30 may be disabled in order to retain the heat present in the thermal storage system 10. In the storing step, the heat is preserve in the bed 35 of heat storing elements 30. The heat transfer fluid 40 present in the storage container 20 in the storing step may still be in a gaseous state. According to an example, the storing step may take place between the charging step and the discharging step. The storing step may also occur between multiple sub-sequent steps of charging, or between multiple sub-sequent steps of discharging. During the storing step, the temperature of the heat storing element 30 may slightly decline over time due to energy losses. However, the configuration of the thermal storage system 10 enables efficient storage for a relatively long time.

In the discharging step, the thermal energy stored in the thermal energy system 10 may be discharged by allowing heat transfer fluid 40 in gaseous state to flow through the bed 35 of the heat storage elements 30. Heat from the heat storage elements 30 may thus be transferred to the heat transfer fluid 40. The discharged heat transfer fluid 40 may be supplied to an industrial process. In the discharging step, heat transfer fluid 40 enters the storage container 20 at one of the first and second ends 21, 22 through the at least one first fluid opening 23 or the at least one second fluid opening 24 and flows through the bed 35 of heat storage elements 30 to the opposite end 21, 22 of the storage container 20. According to an example, the heat transfer fluid 40 entering the storage container 20 in the discharging mode may be retrieved from an industrial process. The industrial process may be the same process as the discharged heat is supplied to. Thus, the heat transfer fluid 40 may recirculate in the discharging mode, which is energy efficient. The temperature of the heat transfer elements 40 in the discharging step is higher than the heat transfer fluid 40 entering the storage container, due to previous charging step. Consequently, heat is transferred from the heat storage elements 30 to the heat transfer fluid 40. This means that the heat transfer fluid 40 entering the storage container 20 in the discharging mode is heated by the heat storage elements 30 when flowing through the bed 35 of heat storage elements 30. Thus, when the heat transfer fluid 40 exits the storage container 20 at the opposite end, the temperature of the heat transfer fluid 40 is higher than when it entered the storage container 20. With a proper selection of parameters and sufficient charging, the output temperature of the discharged heat transfer fluid 40 in the discharging step may be close to 90% of the charging temperature in the charging step and/or the storing temperature in the storing step. As an example, if the bed 35 of heat transfer elements 30 has been charged to a temperature of 1000°C in the charging step, relatively small energy losses have occurred during the storing step, and the heat transfer fluid 40 entering the storage container 20 in the discharging step has a discharge inlet temperature DCₗₙ of 700°C, the heat transfer fluid 40 discharged in the discharging step may have a discharge outlet temperature DC_{Out} of around 900°C.

According to an example, the step of charging s120 comprises step-wise heating. According to an example, the step of charging s120 comprises heating in intervals. According to an example, the heat transfer fluid 40 is configured to enter the storage container 20 at a pressure determined on the basis of the flow rate of the heat transfer fluid 40 and/or the length L_{B} of the bed 35 of heat storage elements 30. According to an example, the step of discharging s140 comprises discharging in intervals.

The foregoing description of the preferred examples of the present disclosure is provided for illustrative and descriptive purposes. It is not intended to be exhaustive or to restrict the invention to the variants described. Many modifications and variations will obviously be apparent to one skilled in the art. The examples of the present disclosure have been chosen and described in order best to explain the principles of the invention and its practical applications and hence make it possible for specialists to understand the invention for various embodiments and with the various modifications appropriate to the intended use.

## Claims

1. A thermal storage system (10) for industrial processes, the thermal storage system (10) being configured for cycling between a charging mode, a storing mode and a discharging mode,
the thermal storage system (10) comprising:
a storage container (20) extending longitudinally between a first end (21) and a second end (22) along an axis (A), wherein the first end (21) comprises at least one first fluid opening (23) and the second end (22) comprises at least one second fluid opening (24), wherein inner walls (25) extend between the first end (21) and the second end (22) of the storage container (20);
a bed (35) of heat storage elements (30) arranged inside the storage container (20), the heat storage elements (30) are in a solid state in the charging mode, the storing mode and the discharging mode; and
a heat transfer fluid (40), wherein the heat transfer fluid (40) is allowed to enter the storage container (20) at one of the first and second ends (21, 22) through the at least one first fluid opening (23) or the at least one second fluid opening (24) and flow through the bed (35) of heat storage elements (30) to the opposite end (21, 22) of the storage container (20), wherein the heat transfer fluid (40) is configured to transfer heat to the heat storage elements (30) in the charging mode and from the heat storage elements (30) in the discharging mode,
wherein the heat transfer fluid (40) is in a gaseous state in the charging mode, the storing mode and the discharging mode;
the heat transfer fluid (40) is configured to enter the storage container (20) at a temperature of at least 500°C in the charging mode;
the heat storage elements (30) comprise iron ore pellets.

2. The thermal storage system (10) according to claim 1, wherein the iron ore pellets are of a uniform shape and size.

3. The thermal storage system (10) according to claim 1 or claim 2, wherein the iron ore pellets are sphere-shaped and have a uniform diameter.

4. The thermal storage system (10) according to any one of the preceding claims, wherein the iron ore pellets comprise hematite, wherein hematite comprises at least half of the total iron content, by weight, of the iron ore pellets.

5. The thermal storage system (10) according to any one of the preceding claims, wherein the heat transfer fluid (40) is disabled to flow through the storage container (20) in the storing mode.

6. The thermal storage system (10) according to any one of the preceding claims, wherein the inner walls (25) of the storage container (20) comprises insulation (50).

7. The thermal storage system (10) according to any one of the preceding claims, wherein the bed (35) of heat storage elements (30) has a length (LB) extending along the axis (A) and a width (D_{B}) extending perpendicular to the axis (A), wherein the width (D_{B}) of the bed (35) of heat storage elements (30) is at least 0.7 meters.

8. The thermal storage system (10) according to claim 7, wherein the bed (35) of heat storage elements (30) has a length (L_{B}) to width (D_{B}) ratio of 1:1 to 5:1.

9. The thermal storage system (10) according to any one of the preceding claims, wherein the bed (35) of heat storage elements (30) has a cylindrical shape extending along the axis (A), wherein the axis (A) is arranged vertically or horizontally.

10. The thermal storage system (10) according to any one of the claims 1 to 8, wherein the bed (35) of heat storage elements (30) has a shape of a frustum, wherein the widest part of the frustum is directed vertically upwards.

11. The thermal storage system (10) according to any one of the claims 1 to 8 or 10, wherein the axis (A) is arranged vertically and the bed (35) of heat storage elements (30) has a cross sectional area (B_{A}, B_{B}) arranged perpendicular to the axis (A), wherein the cross sectional area (B_{A}, B_{B}) increases along the axis (A) in an upward direction.

12. The thermal storage system (10) according to any one of the preceding claims, wherein a thermal gradient zone (TG) arises along the axis (A) in the bed (35) of heat storage elements (30) in the discharging mode, wherein the thermal gradient zone (TG) is positioned between a low temperature zone having the same temperature as the heat transfer fluid (40) entering the storage container (20) and a high temperature zone having the same temperature as the heat transfer fluid (40) exiting the storage container (20), wherein an extent (L_{TG}) of the thermal gradient zone (TG) along the axis (A) is controlled by a flow rate of the heat transfer fluid (40) and/or the temperature of the heat transfer fluid (40) entering the storage container (20) and/or the temperature difference between the heat transfer fluid (40) entering the storage container (20) and a current top temperature of the heat storage elements (30).

13. The thermal storage system (10) according to any one of claims 1-12, comprising at least two storage containers (20) connected in series or in parallel.

14. A method for storing thermal energy by using a thermal storage system (10), the thermal storage system (10) being configured for cycling between a charging mode, a storing mode and a discharging mode,
the thermal storage system (10) comprising:
a storage container (20) extending longitudinally between a first end (21) and a second end (22) along an axis (A), wherein the first end (21) comprises at least one first fluid opening (23) and the second end (22) comprises at least one second fluid opening (24), wherein inner walls (25) extend between the first end (21) and the second end (22) of the storage container (20);
a bed (35) of heat storage elements (30) arranged inside the storage container (20), the heat storage elements (30) are in a solid state in the charging mode, the storing mode and the discharging mode, the heat storage elements (30) comprises iron ore pellets; and
heat transfer fluid (40), wherein the heat transfer fluid (40) is allowed to enter the thermal storage system (10) at one of the first and second ends (21, 22) through the at least one first fluid opening (23) or the at least one second fluid opening (24) and flow through the bed (35) of heat storage elements (30) to the opposite end (21, 22) of the storage container (20), the heat transfer fluid (40) is in a gaseous state in the charging mode, the storing mode and the discharging mode;
**the method comprises the steps of:**
charging (s120) the thermal storage system (10) by allowing the heat transfer fluid (40) to flow through the bed (35) of the heat storage elements (30), wherein the heat transfer fluid (40) is at a temperature of at least 500°C when entering the storage container (20), whereby heat from the heat transfer fluid (40) is transferred to the heat storage elements (30);
storing (s130) heat in the thermal storage system (10) by means of disabling the flow of the heat transfer fluid (40); and
discharging (s140) heat from the thermal storage system (10) by allowing the heat transfer fluid (40) to flow through the bed (35) of the heat storage elements (30), whereby heat from the heat storage elements (30) is transferred to the heat transfer fluid (40).

15. The use of a thermal storage system (10) according to any one of claims 1-13 for storage and supply of heat for calcining processes and/or steam cycle processes and/or paper/pulp processes and/or district heating networks.
